# EUROPEAN PATENT APPLICATION

(11) **EP 4 596 649 A1**
(43) Date of publication of application: **06.08.2025**
(21) Application number: 22961051.4
(22) Date of filing: 09.11.2022
(51) Int. Cl.: C09J 11/06, C09J 121/00, C09J 153/02

(54) **ADHESIVE COMPOSITION AND PRODUCTION METHOD FOR ADHESIVE COMPOSITION**

(30) Priority: 30.09.2022 JP 2022159144
(71) Applicant: Kuraray Co., Ltd., Kurashiki-shi, Okayama 710-0801 (JP)
(72) Inventor: KANEKO, Shuhei, Kamisu-shi, Ibaraki 314-0197 (JP); KONISHI, Daisuke, Kamisu-shi, Ibaraki 314-0197 (JP); SASAKI, Hiromitsu, Kamisu-shi, Ibaraki 314-0197 (JP)
(74) Representative: Müller-Boré & Partner Patentanwälte PartG mbB
(86) International application number: PCT/JP2022/041794
(87) International publication number: WO 2024/069992

(57) **Abstract**

It is provided an adhesive composition having a high biobased content and having a moderate adhesive property and high heat resistance and a method for producing the same, and an adhesive composition including: a block copolymer (X) including a polymer block (A) containing a structural unit derived from an aromatic vinyl compound and a polymer block (B) containing a structural unit derived from a conjugated diene compound, and a tackifier (Y), in which the block copolymer (X) includes, as the polymer block (B), at least one polymer block (B-1) containing a structural unit derived from β-farnesene, and the block copolymer (X) include at least one selected from the group consisting of an unhydrogenated block copolymer (X0) which is a block copolymer that is not hydrogenated, and a hydrogenated block copolymer (X1) which is a hydrogenated block copolymer and has a degree of hydrogenation of less than 50 mol%.

## Description

### Technical Field

The present invention relates to an adhesive composition and a method for producing an adhesive composition.

### Background Art

An adhesive composition including a block copolymer of a polymer block containing a structural unit derived from an aromatic vinyl compound such as styrene and a polymer block containing a structural unit derived from a conjugated diene compound is known. Such an adhesive composition is widely used because it has a predetermined adhesive property and is excellent in coating workability.

In recent years, an adhesive composition has also been required to be an environmentally friendly composition using a natural component.

For example, PTL 1 describes an adhesive composition including a block copolymer containing a polystyrene block and a polyfamesene block. The β-farnesene used to form the polyfarnesene block is obtained by fermenting the sugar content of sugar cane, and therefore can increase the biomass ratio of the adhesive composition.

### Citation List

### Patent Literature

PTL1: JP2012-502135A

### Summary of Invention

### Technical Problem

In recent years, as the applications of the adhesive composition including the above-mentioned block copolymer have been expanded, there is a case where the adhesive composition is required to have high heat resistance in addition to a moderate adhesive property. Therefore, it is a condition that still has room for improvement in the adhesive composition including the above-mentioned block copolymer.

Accordingly, an object of the present invention is to provide an adhesive composition having a high biobased content and having a moderate adhesive property and high heat resistance, and a method for producing the same.

### Solution to Problem

The present inventors have found that, in an adhesive composition including a block copolymer (X) including a polymer block (A) containing a structural unit derived from an aromatic vinyl compound and a polymer block (B) containing a structural unit derived from a conjugated diene compound, and a tackifier (Y), the above problem can be solved by specifying the structural unit derived from a conjugated diene compound of the polymer block (B), and have completed the present invention.

The present invention relates to the following [1] to [13].
[1] An adhesive composition including: a block copolymer (X) including a polymer block (A) containing a structural unit derived from an aromatic vinyl compound and a polymer block (B) containing a structural unit derived from a conjugated diene compound, and a tackifier (Y),
   in which the block copolymer (X) includes, as the polymer block (B), at least one polymer block (B-1) containing a structural unit derived from β-farnesene, and
   the block copolymer (X) includes at least one selected from the group consisting of an unhydrogenated block copolymer (X0) which is a block copolymer that is not hydrogenated, and a hydrogenated block copolymer (X1) which is a hydrogenated block copolymer and has a degree of hydrogenation of less than 50 mol%.
[2] The adhesive composition according to above-mentioned [1], in which a content of the tackifier (Y) is 50 to 170 parts by mass with respect to 100 parts by mass of the block copolymer (X).
[3] The adhesive composition according to above-mentioned [1] or [2], in which the block copolymer (X) does not contain a diblock composed of the polymer block (A) and the polymer block (B), or the content of the diblock in the block copolymer (X) is more than 0% by mass and less than 60% by mass.
[4] The adhesive composition according to any one of above-mentioned [1] to [3], in which at least one selected from the group consisting of the unhydrogenated block copolymer (X0) and the hydrogenated block copolymer (X1) having a degree of hydrogenation of less than 50 mol% is crosslinked.
[5] The adhesive composition according to any one of above-mentioned [1] to [4], in which the block copolymer (X) has a glass transition temperature (Tg) of -52°C or lower.
[6] The adhesive composition according to any one of above-mentioned [1] to [5], further including at least one selected from the group consisting of a liquid rubber component (Za), a biomass-derived plasticizer (Zb), and a synthetic plasticizer (Zc).
[7] The adhesive composition according to any one of above-mentioned [1] to [6], further including a liquid rubber component (Za), in which the liquid rubber component (Za) includes at least one selected from the group consisting of an unhydrogenated liquid rubber (Za0), which is a liquid rubber that is not hydrogenated, and a hydrogenated liquid rubber (Za1), which is a hydrogenated liquid rubber and has a degree of hydrogenation of 90 mol% or less.
[8] The adhesive composition according to any one of above-mentioned [1] to [7], in which a 180° peel strength measured in accordance with JIS Z 0237:2009 under conditions of a temperature of 23°C and a peel rate of 200 mm/minutes is 10.0 N/25 mm or more.
[9] The adhesive composition according to above-mentioned [4], in which a shear adhesion failure temperature (SAFT) calculated from a falling time of a weight in accordance with ASTM D3654M:2019 under conditions of an adhesive area of 25 mm × 25 mm, a weight of 500 g, a temperature range of 40 to 205°C, and a rate of temperature increase of 0.5°C/minutes is 200°C or higher.
[10] The adhesive composition according to any one of above-mentioned [1] to [9], in which a biobased content of the adhesive composition measured in accordance with ASTM D6866-21 is 10 to 100% by mass.
[11] The adhesive composition according to any one of above-mentioned [1] to [10], in which a vinyl bonding amount in the polymer block (B-1) is 3 to 20 mol%.
[12] The adhesive composition according to any one of above-mentioned [1] to [11], in which the content of the polymer block (A) in the block copolymer (X) is 40% by mass or less.
[13] A method for producing the adhesive composition according to any one of above-mentioned [1] to [12], the method for producing the adhesive composition including:
   (I) a step of dissolving the block copolymer (X) and the tackifier (Y) in a solvent and then distilling off the solvent; or
   (II) a step of melt-kneading the block copolymer (X) and the tackifier (Y).

### Advantageous Effects of Invention

According to the present invention, it is possible to provide an adhesive composition having a high biobased content and having a moderate adhesive property and high heat resistance, and a method for producing the same.

### Description of Embodiments

Hereinafter, an embodiment of the present invention is described.

An aspect obtained by arbitrarily selecting or an aspect obtained by arbitrarily combining the matter(s) described in the present specification is also included in the present invention.

In the present specification, a preferable definition can be arbitrarily selected, and it can be said that a combination of preferable definitions is more preferable.

In the present specification, the description "XX to YY" means "XX or more and YY or less".

In the present specification, with respect to a preferable numerical range (for example, a range of content or the like), the lower limit value and the upper limit value described in a stepwise manner can be independently combined. For example, from the description "preferably 10 to 90, more preferably 30 to 60", the "preferable lower limit value (10)" and the "more preferable upper limit value (60)" can be combined to obtain "10 to 60".

### [Adhesive Composition]

An adhesive composition according to an embodiment of the present invention includes a block copolymer (X) including a polymer block (A) containing a structural unit derived from an aromatic vinyl compound and a polymer block (B) containing a structural unit derived from a conjugated diene compound, and a tackifier (Y). Further, the block copolymer (X) includes, as the polymer block (B), at least one polymer block (B-1) containing a structural unit derived from β-farnesene. Furthermore, the block copolymer (X) includes at least one selected from the group consisting of an unhydrogenated block copolymer (X0), which is a block copolymer that is not hydrogenated, and a hydrogenated block copolymer (X1), which is a hydrogenated block copolymer and has a degree of hydrogenation of less than 50 mol%.

Since the polymer block (B) contained in the block copolymer (X) of the adhesive composition contains at least one polymer block (B-1) containing a structural unit derived from β-farnesene, the biobased content of the adhesive composition can be increased. In addition, by including the polymer block (B-1) containing a structural unit derived from β-farnesene, the block copolymer (X) has a low viscosity and is flexible, and the adhesive composition including it easily follows the unevenness of the adherend.

Further, the block copolymer (X) includes at least one selected from the group consisting of an unhydrogenated block copolymer (X0), which is a block copolymer that is not hydrogenated, and a hydrogenated block copolymer (X1), which is a hydrogenated block copolymer and has a degree of hydrogenation of less than 50 mol%. Therefore, the block copolymer (X) has a large number of double bonds, has high crosslinkability, and can be easily crosslinked with a small amount of energy rays such as ultraviolet rays (UV). In particular, the unhydrogenated block copolymer (X0) and the hydrogenated block copolymer (X1) having a degree of hydrogenation of less than 50 mol% have higher reactivity than, for example, a hydrogenated block copolymer having a degree of hydrogenation of 50 mol% or more, because the branched double bond is considered to be involved in the crosslinking reaction. Therefore, by crosslinking, the heat resistance of the adhesive composition can be increased, and a moderate adhesive property can be ensured.

The adhesive composition may contain only the block copolymer (X) and the tackifier (Y), or may contain the block copolymer (X), the tackifier (Y), and other components.

The total content of the block copolymer (X) and the tackifier (Y) in the adhesive composition is preferably 50% by mass or more, more preferably 60% by mass or more, and further more preferably 70% by mass or more, with respect to the total mass of the adhesive composition. Further, it may be 100% by mass or less, 95% by mass or less, or 90% by mass or less. In other words, the total content of the block copolymer (X) and the tackifier (Y) in the adhesive composition is preferably 50 to 100% by mass with respect to the total mass of the adhesive composition.

In the case of forming an adhesive layer using the adhesive composition, a method of dissolving the adhesive composition in an appropriate solvent, applying it to an appropriate support or adherend, and drying it to form a coating film can be used. Further, the adhesive composition can also be used as a hot-melt adhesive composition. In this case, the adhesive composition is heated to have a low viscosity and then supplied onto a first adherend, or the adhesive composition is placed on a first adherend and then heated to have a low viscosity, and then a second adherend is superposed thereon, whereby the two adherends can be adhered to each other.

### <Block Copolymer (X)>

The block copolymer (X) includes a polymer block (A) containing a structural unit derived from an aromatic vinyl compound and a polymer block (B) containing a structural unit derived from a conjugated diene compound. Further, the block copolymer (X) contains, as the polymer block (B), at least one polymer block (B-1) containing a structural unit derived from β-farnesene. Therefore, the biobased content of the adhesive composition can be increased as compared with the case where the polymer block (B-1) is not contained.

In addition, since the polymer block (B-1) contains a structural unit derived from β-farnesene and since this β-farnesene has a bulky side chain, it is considered that the entanglement between molecules is reduced to reduce the viscosity, and the affinity between the tackifier (Y) and the block copolymer (X) is increased, and as a result, the adhesive composition can contain the tackifier (Y) at a high content ratio.

The polymer block (B) is described in detail later.

As described above, the block copolymer (X) includes at least one selected from the group consisting of an unhydrogenated block copolymer (X0) and a hydrogenated block copolymer (X1) having a degree of hydrogenation of less than 50 mol%, and may further include a hydrogenated block copolymer having a degree of hydrogenation of 50 mol% or more in order to adjust the degree of hydrogenation.

The block copolymer (X) preferably consists substantially only of the unhydrogenated block copolymer (X0), consists substantially only of the hydrogenated block copolymer (X1) having a degree of hydrogenation of less than 50 mol%, or consists substantially only of both the unhydrogenated block copolymer (X0) and the hydrogenated block copolymer (X1) having a degree of hydrogenation of less than 50 mol%, more preferably consists substantially only of the unhydrogenated block copolymer (X0).

Here, the "substantially" means that it may be an embodiment where a component such as the hydrogenated block copolymer having a degree of hydrogenation of 50 mol% or more, which is inevitably present in the course of preparing the block copolymer, is contained, in addition to an embodiment purely composed only of the unhydrogenated block copolymer (X0) and an embodiment purely composed only of the hydrogenated block copolymer (X1).

Note that when the block copolymer (X) includes both the unhydrogenated block copolymer (X0) and the hydrogenated block copolymer (X1) having a degree of hydrogenation of less than 50 mol%, the unhydrogenated block copolymer used to obtain the latter is preferably the same as the former from the viewpoint of easily obtaining the desired physical properties. However, as long as the effect of the present invention is not impaired, as the unhydrogenated block copolymer for obtaining the latter, for example, an unhydrogenated block copolymer having a molecular weight different from that of the former can be used, or an unhydrogenated block copolymer having a structural unit different from that of the former can be used.

In a case where the block copolymer (X) contains a hydrogenated block copolymer having a degree of hydrogenation of 50 mol% or more for adjusting the degree of hydrogenation mentioned above, the content thereof is not particularly limited, and is preferably 0 to 60% by mass and more preferably 0 to 50% by mass, with respect to the mass of the block copolymer (X), from the viewpoint of making it easy to adjust the degree of hydrogenation while ensuring the desired performance of the block copolymer (X).

The glass transition temperature (Tg) of the block copolymer (X) is preferably -52°C or lower, more preferably -54°C or lower, and further more preferably -57°C or lower, from the viewpoint of easily ensuring the cold resistance and the adhesive force at the time of high speed peeling of the adhesive composition.

Hereinafter, the respective components constituting the block copolymer (X) are described, but unless otherwise specified, these descriptions apply to both the unhydrogenated block copolymer (X0) and the hydrogenated block copolymer (X1).

### (Polymer Block (A))

The polymer block (A) contains a structural unit derived from an aromatic vinyl compound (hereinafter sometimes referred to as "aromatic vinyl compound unit. "). Examples of such an aromatic vinyl compound include styrene, α-methylstyrene, 2-methylstyrene, 3-methylstyrene, 4-methylstyrene, 4-propylstyrene, 4-t-butylstyrene, 4-cyclohexylstyrene, 4-dodecylstyrene, 2,4-dimethylstyrene, 2,4-diisopropylstyrene, 2,4,6-trimethylstyrene, 2-ethyl-4-benzylstyrene, 4-(phenylbutyl) styrene, 1-vinylnaphthalene, 2-vinylnaphthalene, vinylanthracene, N,N-diethyl-4-aminoethylstyrene, vinylpyridine, 4-methoxystyrene, monochlorostyrene, dichlorostyrene, and divinylbenzene. These aromatic vinyl compounds may be used alone or in combination of two or more kinds thereof. Among these, styrene, α-methylstyrene, and 4-methylstyrene are preferable, and styrene is more preferable.

The polymer block (A) may contain a structural unit derived from a monomer other than the aromatic vinyl compound, for example, the other monomer such as a monomer constituting the polymer block (B) mentioned later. However, the content of the aromatic vinyl compound unit in the polymer block (A) is preferably 60% by mass or more, more preferably 70% by mass or more, further more preferably 80% by mass or more, still further more preferably 90% by mass or more, and particularly preferably 100% by mass. The upper limit of the content of the aromatic vinyl compound unit in the polymer block (A) may be 100% by mass, 99% by mass, or 98% by mass. In other words, the content of the aromatic vinyl compound unit in the polymer block (A) is preferably 60 to 100% by mass.

The block copolymer (X) may have at least one of the polymer block (A). In the case where the block copolymer (X) has two or more polymer blocks (A), these polymer blocks (A) may be the same or different. Note that, in the present specification, "polymer blocks are different" means that at least one of the monomer unit constituting the polymer block, the weight average molecular weight, the stereoregularity, and the ratio of each monomer unit and the form of copolymerization (random, tapered, block) in the case of having a plurality of monomer units is different.

The block copolymer (X) preferably has two or more polymer blocks (A) from the viewpoint of heat resistance and adhesive retentivity (creep property) of the adhesive composition.

The content of the polymer block (A) in the block copolymer (X) (in a case where it has a plurality of polymer blocks (A), the total content thereof) is preferably 40% by mass or less, more preferably 35% by mass or less, further more preferably 30% by mass or less, and particularly preferably 25% by mass or less, from the viewpoint of flexibility, and is preferably 3% by mass or more, more preferably 5% by mass or more, and further more preferably 7% by mass or more, from the viewpoint of the balance between the adhesive force and the heat resistance. **In** other words, the content of the polymer block (A) in the block copolymer (X) is preferably 3 to 35% by mass.

Note that the content of the polymer block (A) in the block copolymer (X) is a value determined by ¹H-NMR measurement, and more specifically, a value measured according to the method described in Examples.

The weight average molecular weight (Mw) of the polymer block (A) is preferably 3,000 to 60,000, more preferably 4,000 to 50,000, further more preferably 5,000 to 40,000, still further more preferably 5,500 to 30,000, and yet still further more preferably 6,000 to 20,000, from the viewpoint of coatability and heat resistance.

The weight average molecular weight (Mw) of the polymer block (A) can be set within the above range by, for example, adjusting the amount of the aromatic vinyl compound with respect to the polymerization initiator used for the polymerization.

Note that the "weight average molecular weight" all described in the present specification and the claims is a weight average molecular weight in terms of standard polystyrene obtained by gel permeation chromatography (GPC) measurement, and the detailed measurement method can follow the method described in the examples.

### (Polymer Block (B))

The polymer block (B) contains a structural unit derived from a conjugated diene compound (hereinafter, sometimes abbreviated as "conjugated diene compound unit"). Further, the block copolymer (X) used in the present invention contains, as the polymer block (B), at least one polymer block (B-1) containing a structural unit derived from β-farnesene.

The block copolymer (X) used in the present invention may further contain, as the polymer block (B), a polymer block (B-2) that contains a structural unit derived from a conjugated diene compound other than β-farnesene and does not contain a structural unit derived from β-farnesene, in addition to the polymer block (B-1).

The polymer blocks (B-1) and (B-2) are described in detail later.

The total content of the structural unit derived from β-farnesene in the polymer block (B) is preferably 10% by mass or more, more preferably 20% by mass or more, further more preferably 30% by mass or more, still further more preferably 40% by mass or more, still further more preferably 50% by mass or more, still further more preferably 60% by mass or more, still further more preferably 70% by mass or more, still further more preferably 80% by mass or more, and particularly preferably 90% by mass or more, from the viewpoint of suppressing crystallization and ensuring strength of the polymer block (B). The upper limit is not particularly limited, and may be 100% by mass, 99% by mass or less, or 98% by mass or less. In other words, the total content of the structural unit derived from β-farnesene in the polymer block (B) is preferably 10 to 100% by mass.

The polymer block (B) may contain a structural unit derived from β-farnesene and a structural unit derived from at least one selected from the group consisting of butadiene, isoprene, and myrcene.

In this case, (a) the block copolymer (X) contains the polymer block (B-1) and the polymer block (B-2) described above, and the polymer block (B-2) may contain a structural unit derived from at least one selected from the group consisting of butadiene, isoprene, and myrcene, or (b) the polymer block (B-1) may contain a structural unit derived from β-farnesene and a structural unit derived from at least one selected from the group consisting of butadiene, isoprene, and myrcene.

The content of the conjugated diene compound unit in the total amount of the polymer block (B) (that is, the total content of the structural unit derived from β-farnesene and the structural unit derived from a conjugated diene compound other than β-farnesene) is preferably 60% by mass or more, more preferably 70% by mass or more, further more preferably 80% by mass or more, particularly preferably 90% by mass or more, and most preferably substantially 100% by mass, from the viewpoint of flexibility and the biobased content. The upper limit is not particularly limited, and may be 100% by mass, 99% by mass, or 98% by mass. In other words, the content of the conjugated diene compound unit in the total amount of the polymer block (B) is preferably 60 to 100% by mass.

Note that the content of the conjugated diene compound unit in the total amount of the polymer block (B) is preferably 30 mol% or more, more preferably 50 mol% or more, further more preferably 65 mol% or more, still further more preferably 80 mol% or more, particularly preferably 90 mol% or more, and most preferably substantially 100 mol%. The upper limit of the content of the conjugated diene compound unit in the total amount of the polymer block (B) may be 100 mol%, 99 mol%, or 98 mol%. In other words, the content of the conjugated diene compound unit in the total amount of the polymer block (B) is preferably 30 to 100 mol%.

The mixing ratio (mass ratio) of the conjugated diene compound in the entire polymer block (B) [β-farnesene/conjugated diene compound other than β-farnesene] is not particularly limited as long as the effect of the present invention is not impaired, and is preferably 3/97 to 100/0, more preferably 40/60 to 100/0, further more preferably 50/50 to 100/0, still further more preferably 70/30 to 100/0, still further more preferably 80/20 to 100/0, still further more preferably 85/15 to 100/0, and particularly preferably 90/10 to 100/0, from the viewpoint of increasing the biobased content and reducing the viscosity. Further, from the viewpoint of increasing the cohesive force, it is preferably 3/97 to 90/10, more preferably 5/95 to 85/15, further more preferably 10/90 to 45/55, and particularly preferably 15/85 to 40/60. In addition, from the viewpoint of the balance among the biobased content, the reduction in viscosity, and the cohesive force, it may be 25/75 to 65/35, or may be 30/70 to 60/40.

The polymer block (B) may contain a structural unit derived from a polymerizable monomer other than the conjugated diene compound as long as the object and effect of the present invention are not impaired. In this case, in the polymer block (B), the content of the structural unit derived from a polymerizable monomer other than the conjugated diene compound is preferably 70 mol% or less, more preferably 50 mol% or less, further more preferably 35 mol% or less, still further more preferably 20 mol% or less, and particularly preferably 10 mol% or less. The lower limit value of the content of the structural unit derived from the polymerizable monomer other than the conjugated diene compound is not particularly limited, and may be 0 mol% or 5 mol%. In other words, the content of the structural unit derived from a polymerizable monomer other than the conjugated diene compound in the polymer block (B) is preferably 0 to 70 mol%.

The total weight average molecular weight of the polymer blocks (B) contained in the block copolymer (X) is preferably 30,000 to 300,000, more preferably 40,000 to 250,000, and further more preferably 50,000 to 200,000, in a state before hydrogenation, from the viewpoint of coatability, heat resistance, and the like.

### (Polymer Block (B-1))

The polymer block (B-1) contains a structural unit (b11) derived from β-farnesene (hereinafter sometimes simply referred to as "structural unit (b11)").

The content of the structural unit (b11) in the polymer block (B-1) is preferably 1 to 100% by mass. Since the structural unit (b11) has a long and bulky side chain in a molecule thereof, the polymer block (B-1) contains the structural unit (b11), so that the flexibility of the block copolymer (X) becomes good. From this viewpoint, the content of the structural unit (b11) in the polymer block (B-1) is more preferably 10 to 100% by mass, further more preferably 20 to 100% by mass, still further more preferably 30 to 100% by mass, particularly preferably 50 to 100% by mass, and most preferably 100% by mass, that is, it is most preferable that the polymer block (B-1) consists only of the structural unit (b11).

In addition, since β-farnesene is bio-derived, the used amount of conjugated diene compound other than β-farnesene, such as petroleum-derived butadiene and isoprene can be suppressed, and the degree of petroleum dependency can be reduced. From this viewpoint, the content of the structural unit (b11) in the polymer block (B-1) is preferably 50 to 100% by mass, more preferably 60 to 100% by mass, further more preferably 70 to 100% by mass, and still further more preferably 80 to 100% by mass.

Further, when a structural unit (b12) mentioned later is contained in the polymer block (B-1), the content of the structural unit (b11) in the polymer block (B-1) is preferably 1 to 99% by mass, more preferably 10 to 99% by mass, further more preferably 20 to 99% by mass, still further more preferably 30 to 99% by mass, and particularly preferably 50 to 99% by mass.

The polymer block (B-1) may contain a structural unit (b12) derived from a conjugated diene compound other than β-farnesene (hereinafter, also simply referred to as "structural unit (b12)"), and the content of the structural unit (b12) in the polymer block (B-1) is preferably 0 to 99% by mass.

Such a conjugated diene compound is preferably a conjugated diene compound having no farnesene skeleton, and examples thereof include isoprene, butadiene, 2,3-dimethylbutadiene, 2-phenyl-butadiene, 1,3-pentadiene, 2-methyl-1,3-pentadiene, 1,3-hexadiene, 1,3-octadiene, 1,3-cyclohexadiene, 2-methyl-1,3-octadiene, 1,3,7-octatriene, myrcene, and chloroprene. These can be used alone or in combination of two or more kinds thereof. Among these, isoprene, butadiene, and myrcene are preferable, and isoprene and butadiene are more preferable.

When the polymer block (B-1) contains the structural unit (b12), the content of the structural unit (b12) is more preferably 90% by mass or less, further more preferably 80% by mass or less, still further more preferably 70% by mass or less, and particularly preferably 50% by mass or less.

The polymer block (B-1) may contain a structural unit other than the structural unit (b11) and the structural unit (b12). The total content of the structural unit (b11) and the structural unit (b12) in the polymer block (B-1) is preferably 60% by mass or more, more preferably 80% by mass or more, and further more preferably 100% by mass.

From the viewpoint of coatability and heat resistance, the weight average molecular weight (Mw) of the polymer block (B-1) is preferably 30,000 to 300,000, more preferably 40,000 to 250,000, and further more preferably 50,000 to 200,000.

The block copolymer (X) used in the present invention may contain only the polymer block (B-1) as the polymer block (B), or may further contain a polymer block (B-2) mentioned later.

From the viewpoint of the dispersibility of the tackifier (Y), the content of the polymer block (B-1) in the entire polymer block (B) is preferably 50% by mass or more, more preferably 55% by mass or more, and further more preferably 60% by mass or more, with respect to the mass of the entire polymer block (B). The upper limit is not particularly limited, and may be 100% by mass or less, 95% by mass or less, or 90% by mass or less. In other words, the content of the polymer block (B-1) in the entire polymer block (B) is preferably 50 to 100% by mass.

### (Polymer Block (B-2))

The block copolymer (X) can further contain, as the polymer block (B), a polymer block (B-2) containing a structural unit (b22) mentioned later, in addition to the polymer block (B-1). The polymer block (B-2) does not contain a structural unit derived from β-farnesene.

That is, in the polymer block (B-2), the content of the structural unit (b21) derived from β-farnesene (hereinafter, also simply referred to as "structural unit (b21)") is 0% by mass.

Examples of the conjugated diene compound constituting the structural unit (b22) derived from a conjugated diene compound other than β-farnesene (hereinafter, also simply referred to as "structural unit (b22)") include the same conjugated diene compound that constitutes the above mentioned structural unit (b12), and preferably include isoprene, butadiene, and myrcene. Among them, isoprene and butadiene are more preferable. These may be used alone or in combination of two or more kinds thereof. Further, the polymer block (B-2) may contain a structural unit other than the structural unit (b22).

The content of the structural unit (b22) in the polymer block (B-2) is more preferably 60 to 100% by mass, further more preferably 80 to 100% by mass, still further more preferably 90 to 100% by mass, and particularly preferably 100% by mass.

From the viewpoint of coatability, the weight average molecular weight of the polymer block (B-2) is preferably 4,000 to 200,000, more preferably 4,500 to 150,000, and further more preferably 5,000 to 100,000.

### (Bonding Form)

The block copolymer (X) contains at least one polymer block (A) and at least one polymer block (B).

The bonding form of the polymer block (A) and the polymer block (B) is not particularly limited, and may be linear, branched, radial, or a combination of two or more thereof. Among these, a form in which each block is linearly bonded is preferable.

Examples of the linear bonding form can include a bonding form represented by (A-B)ₗ, A-(B-A)ₘ, or B-(A-B)ₙ when the polymer block (A) is represented by A and the polymer block (B) is represented by B. Note that the l, m, and n each independently represent an integer of 1 or more.

When the block copolymer (X) contains at least one polymer block (A) and at least one polymer block (B-1), it is preferably a triblock copolymer represented by A-B1-A, which is a bonding form having blocks of the polymer block (A), the polymer block (B-1), and the polymer block (A) in this order.

That is, the block copolymer (X) is preferably a triblock copolymer represented by A-B1-A.

When the block copolymer (X) contains the polymer block (B-1) and the polymer block (B-2) as the polymer block (B), the bonding form of the plurality of polymer blocks is not particularly limited, and may be linear, branched, radial, or a combination of two or more thereof. Among these, a form in which each block is linearly bonded is preferable.

The block copolymer (X) preferably contains a structure having blocks of the polymer block (B-1), the polymer block (A), and the polymer block (B-2) in this order (that is, a structure of B1-A-B2).

Specifically, the block copolymer (X) is preferably a tetrablock copolymer represented by B1-A-B2-A, a pentablock copolymer represented by B1-A-B2-A-B1, and a copolymer represented by B1-A-(B2-A)ₚ-B1, B1-A-(B2-A-B1)_{q}, or B1-(A-B2-A-B1)ᵣ (p, q, and r each independently represent an integer of 2 or more), and among these, a pentablock copolymer represented by B1-A-B2-A-B1 is more preferable.

That is, when the block copolymer (X) contains the polymer block (B-1) and the polymer block (B-2) as the polymer block (B), the block copolymer (X) is preferably a pentablock copolymer represented by B1-A-B2-A-B1.

Here, in the present specification, in a case where the same kind of polymer blocks are linearly bonded with a divalent coupling agent or the like therebetween, the entire bonded polymer blocks are treated as one polymer block. Accordingly, a polymer block that should have otherwise been strictly denoted as A-X-A (X represents a coupling agent residual group) is denoted as A as a whole. In the present specification, since this kind of polymer block containing a coupling agent residual group is treated as described above, for example, a block copolymer containing a coupling agent residual group, which should have been strictly expressed as B1-A-B2-X-B2-A-B1, is expressed as B1-A-B2-A-B1 and is treated as an example of a pentablock copolymer.

Further, the two or more polymer blocks (A) in the block copolymer (X) may be polymer blocks composed of the same structural unit or polymer blocks composed of different structural units. Similarly, when the block copolymer (X) has two or more polymer blocks (B-1) or two or more polymer blocks (B-2), each polymer block may be a polymer block composed of the same structural unit or a polymer block composed of different structural units. For example, in the two polymer blocks (A) in the triblock copolymer represented by A-B-A, the respective aromatic vinyl compounds may be the same or different in kind.

When the block copolymer (X) contains the polymer block (A) and the polymer block (B-1) but does not contain the polymer block (B-2), a mass ratio [(A)/(B-1)] of the polymer block (A) to the polymer block (B-1) is preferably 1/99 to 70/30, more preferably 5/95 to 60/40, further more preferably 10/90 to 50/50, still further more preferably 15/85 to 40/60, and still further more preferably 15/85 to 35/65. Within this range, an adhesive composition having a good adhesive force and a high biobased content can be obtained.

When the block copolymer (X) contains the polymer block (A), the polymer block (B-1), and the polymer block (B-2), the mass ratio [(A)/(B-1)] of the polymer block (A) to the polymer block (B-1) is preferably 1/99 to 70/30, more preferably 5/95 to 60/40, further more preferably 10/90 to 50/50, further more preferably 20/80 to 40/60, and further more preferably 25/75 to 35/65. Within this range, an adhesive composition having excellent adhesive force and cohesive force can be obtained.

In the block copolymer (X), the mass ratio [(A)/((B-1) + (B-2))] of the polymer block (A) to the total amount of the polymer block (B-1) and the polymer block (B-2) is preferably 1/99 to 70/30. Within this range, an adhesive composition having an excellent balance between viscosity and elasticity can be easily obtained. From this viewpoint, the mass ratio [(A)/((B-1) + (B-2))] is more preferably 1/99 to 60/40, further more preferably 10/90 to 40/60, still further more preferably 10/90 to 30/70, and still further more preferably 15/85 to 25/75.

When the block copolymer (X) contains the polymer block (A), the polymer block (B-1), and the polymer block (B-2), the total content of the structural unit (b11) and the structural unit (b21) with respect to the total amount of the polymer block (B-1) and the polymer block (B-2) in the block polymer [((b11) + (b21)) / ((B-1) + (B-2))] is preferably 40 to 90% by mass, more preferably 50 to 80% by mass, and further more preferably 60 to 70% by mass, from the viewpoint of flexibility.

When the block copolymer (X) contains the polymer block (A) and the polymer block (B-1) but does not contain the polymer block (B-2), the total content of the polymer block (A) and the polymer block (B-1) in the block copolymer (X) is preferably 80% by mass or more, more preferably 90% by mass or more, further more preferably 95% by mass or more, and still further more preferably 100% by mass. That is, the total content of the polymer block (A) and the polymer block (B-1) in the block copolymer (X) is, for example, 80 to 100% by mass.

In addition, when the block copolymer (X) contains the polymer block (A), the polymer block (B-1), and the polymer block (B-2), the total content of these polymer blocks (A), (B-1), and (B-2) in the block copolymer (X) is preferably 80% by mass or more, more preferably 90% by mass or more, further more preferably 95% by mass or more, and still furthermore preferably 100% by mass. That is, the total content of the polymer blocks (A), (B-1), and (B-2) in the block copolymer (X) is, for example, 80 to 100% by mass.

From the viewpoint of suppressing a decrease in the dispersibility of the tackifier (Y), the content of the polymer block (B-2) in the entire polymer block (B) is preferably 50% by mass or less, more preferably 45% by mass or less, and further more preferably 40% by mass or less, and may be 10% by mass or more, or may be 20% by mass or more, but is preferably 0% by mass, with respect to the mass of the entire polymer block (B). In other words, the content of the polymer block (B-1) in the entire polymer block (B) is preferably 0 to 50% by mass.

### (Vinyl Bonding Amount of Polymer Block (B))

The bonding form of the conjugated diene compound is not particularly limited as long as the object and effect of the present invention are not impaired. For example, when the structural unit constituting the polymer block (B) is a structural unit derived from β-farnesene, a structural unit derived from β-farnesene and butadiene, or a structural unit derived from β-farnesene and isoprene, the bonding form of each of β-farnesene, butadiene, and isoprene can be a 1,2-bond, a 1,13-bond, or a 3,13-bond in the case of β-farnesene, a 1,2-bond or a 1,4-bond in the case of butadiene, and a 1,2-bond, a 3,4-bond, or a 1,4-bond in the case of isoprene. Only one of these bonding forms may be present, or two or more of these bonding forms may be present. Among these, the 1,2-bond and the 3,13-bond of β-farnesene, the 1,2-bond of butadiene, and the 1,2-bond and the 3,4-bond of isoprene are defined as vinyl bonding units, and the content of the vinyl bonding unit is defined as the vinyl bonding amount.

Note that the carbon position numbers of β-farnesene are given in the following order.

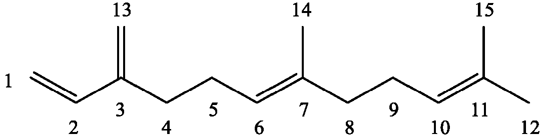

In the block copolymer (X), the vinyl bonding amount of the polymer block (B-1) is preferably 20 mol% or less, more preferably 15 mol% or less, and further more preferably 10 mol% or less, from the viewpoint of reducing the glass transition temperature (Tg) of the polymer block (B-1) and from the viewpoint of ease of production. Further, although not particularly limited, the lower limit value of the vinyl bonding amount in the polymer block (B-1) may be 3 mol% or more, 4 mol% or more, or 5 mol% or more, from the viewpoint of ease of production. In other words, the vinyl bonding amount in the polymer block (B-1) is preferably 3 to 20 mol%. Here, the vinyl bonding amount is the valued calculated by ¹H-NMR measurement according to the method described in Examples. When a plurality of polymer blocks (B-1) is present in the block copolymer (X), the vinyl bonding amount of at least one of the polymer blocks (B-1) may be within the above range, and the vinyl bonding amount of all the polymer blocks (B-1) may be within the above range.

The vinyl bonding amount can be set within the above range by, for example, adjusting the kind and addition amount of a Lewis base used as a cocatalyst (vinylating agent) during polymerization.

The vinyl bonding amount in the polymer block (B-2) is preferably 20 to 45 mol%, more preferably 25 to 44 mol%, and further more preferably 30 to 43 mol%, from the viewpoint of ease of production and reducing of Tg. The total vinyl bonding amount in the polymer block (B) is preferably 3 to 45 mol%, more preferably 4 to 44 mol%, and further more preferably 5 to 43 mol%.

### (Polymer Block Composed of Other Monomers)

The block copolymer (X) may contain a polymer block composed of other monomer(s) as long as the effect of the present invention is not impaired, in addition to the polymer block (A), the polymer block (B-1), and the polymer block (B-2).

Examples of such other monomers include an unsaturated hydrocarbon compound such as propylene, 1-butene, 1-pentene, 4-methyl-1-pentene, 1-hexene, 1-octene, 1-decene, 1-undecene, 1-dodecene, 1-tridecene, 1-tetradecene, 1-pentadecene, 1-hexadecene, 1-heptadecene, 1-octadecene, 1-nonadecene, and 1-eicosene; and a functional group-containing unsaturated compound such as acrylic acid, methacrylic acid, methyl acrylate, methyl methacrylate, acrylonitrile, methacrylonitrile, maleic acid, fumaric acid, crotonic acid, itaconic acid, 2-acryloylethanesulfonic acid, 2-methacryloylethanesulfonic acid, 2-acrylamido-2-methylpropanesulfonic acid, 2-methacrylamido-2-methylpropanesulfonic acid, vinylsulfonic acid, vinyl acetate, and methyl vinyl ether. These may be used alone or in combination of two or more kinds thereof.

When the block copolymer (X) has other polymer blocks, the content thereof is preferably 10% by mass or less, and more preferably 5% by mass or less.

From the viewpoint of easily increasing the heat resistance, it is preferable that the block copolymer (X) does not contain a diblock composed of the polymer block (A) and the polymer block (B), or the content of the diblock in the block copolymer (X) is more than 0% by mass and less than 60% by mass. **In** the latter case, the content of the diblock in the block copolymer (X) is more preferably more than 0% by mass and 50% by mass or less, further more preferably more than 0% by mass and 40% by mass or less, still further more preferably more than 0% by mass and 30% by mass or less, still further more preferably more than 0% by mass and 20% by mass or less, and still further more preferably more than 0% by mass and 10% by mass or less.

In other words, the total content of the multi-block containing a total of three or more polymer blocks (A) and polymer blocks (B) in the block copolymer (X) is preferably more than 40% by mass and 100% by mass or less.

Note that a component such as the unreacted polymer block (A) and the unreacted polymer block (B) is usually less than about 1% by mass of the block copolymer (X) to be produced, and can be ignored. Therefore, in the case where such an unreacted component is contained, the above mass ratio may be set for the component excluding the unreacted component.

In the adhesive composition, at least one selected from the group consisting of the unhydrogenated block copolymer (X0) and the hydrogenated block copolymer (X1) having a degree of hydrogenation of less than 50 mol% is preferably crosslinked from the viewpoint of increasing the heat resistance.

When at least one selected from the group consisting of the unhydrogenated block copolymer (X0) and the hydrogenated block copolymer (X1) is crosslinked, the heat resistance is improved, and on the other hand, the presence of the tackifier (Y) makes it possible to secure a predetermined adhesive property.

Examples of a method for crosslinking at least one selected from the group consisting of the unhydrogenated block copolymer (X0) and the hydrogenated block copolymer (X1) include a method in which a photoradical polymerization initiator and a crosslinking agent, which are mentioned later, are contained in the adhesive composition, and irradiated with ultraviolet rays.

A component other than the unhydrogenated block copolymer (X0) and the hydrogenated block copolymer (X1) may be crosslinked. For example, at least one selected from the group consisting of the tackifier (Y) and the liquid rubber component (Z) mentioned later may be further crosslinked.

### <Method for Producing Block Copolymer (X)>

When the block copolymer (X) is, for example, an unhydrogenated block copolymer (X0) containing the polymer block (A) and the polymer block (B-1), or an unhydrogenated block copolymer (X0) containing the polymer block (A), the polymer block (B-1), and the polymer block (B-2), it can be suitably produced by a polymerization step by anionic polymerization or the like. Further, when the block copolymer (X) is a hydrogenated block copolymer (X1), it can be suitably produced by a step of hydrogenating the carbon-carbon double bond in the structural unit derived from the conjugated diene compound in the unhydrogenated block copolymer (X0).

### (Polymerization Step)

The unhydrogenated block copolymer (X0) can be produced by a solutionpolymerization method, the methods described in JP2012-502135A and JP2012-502136, or the like. Among these, a solution polymerization method is preferable, and for example, a known method such as an ion polymerization method such as anionic polymerization or cationic polymerization, or a radical polymerization method can be applied. Among these, the anionic polymerization method is preferable. In the anionic polymerization method, an aromatic vinyl compound, β-farnesene, and, as necessary, a conjugated diene compound other than β-farnesene are sequentially added in the presence of a solvent, an anionic polymerization initiator, and as necessary, a Lewis base to obtain the unhydrogenated block copolymer (X0).

Examples of the anionic polymerization initiator include an alkali metal such as lithium, sodium, and potassium; an alkaline earth metal such as beryllium, magnesium, calcium, strontium, and barium; a lanthanoid-based rare earth metal such as lanthanum and neodymium; and a compound containing the alkali metal, the alkaline earth metal and the lanthanoid-based rare earth metal. Among these, a compound containing an alkali metal and an alkaline earth metal is preferable, and an organic alkali metal compound is more preferable.

Examples of the organic alkali metal compound include an organolithium compound such as methyllithium, ethyllithium, n-butyllithium, sec-butyllithium, t-butyllithium, hexyllithium, phenyllithium, stilbenelithium, dilithiomethane, dilithionaphthalene, 1,4-dilithiobutane, 1,4-dilithio-2-ethylcyclohexane, and 1,3,5-trilithiobenzene; sodium naphthalene; and potassium naphthalene. Among these, an organolithium compound is preferable, n-butyllithium and sec-butyllithium are more preferable, and sec-butyllithium is further more preferable. Note that the organic alkali metal compound may be reacted with a secondary amine such as diisopropylamine, dibutylamine, dihexylamine, or dibenzylamine and used as an organic alkali metal amide.

The used amount of the organic alkali metal compound used in the polymerization varies depending on the molecular weight of the unhydrogenated block copolymer (X0), but is usually in the range of 0.01 to 3% by mass with respect to the total amount of the aromatic vinyl compound, β-farnesene, and the conjugated diene compound other than β-farnesene.

The solvent is not particularly limited as long as it does not adversely affect the anionic polymerization reaction, and examples thereof include a saturated aliphatic hydrocarbon such as n-pentane, isopentane, n-hexane, n-heptane, and isooctane; a saturated alicyclic hydrocarbon such as cyclopentane, cyclohexane, and methylcyclopentane; and an aromatic hydrocarbon such as benzene, toluene, and xylene. These can be used alone or in combination of two or more kinds thereof. The used amount of the solvent is not particularly limited.

The Lewis base has a role of controlling the microstructure of the structural unit derived from β-farnesene and the structural unit derived from a conjugated diene compound other than β-farnesene. Examples of such a Lewis base include an ether compound such as dibutyl ether, diethyl ether, tetrahydrofuran, dioxane, and ethylene glycol diethyl ether; pyridine; a tertiary amine such as N,N,N',N'-tetramethylethylenediamine and trimethylamine; an alkali metal alkoxide such as potassium t-butoxide; and a phosphine compound. When a Lewis base is used, the amount thereof is usually preferably in the range of 0.01 to 1,000 molar equivalent with respect to 1 mol of the anionic polymerization initiator.

The temperature of the polymerization reaction is usually in the range of about -80°C to +150°C, preferably 0°C to 100°C, and more preferably 10°C to 90°C. The type of the polymerization reaction may be a batch type or a continuous type. The unhydrogenated block copolymer (X0) can be produced by continuously or intermittently supplying each monomer to the polymerization reaction liquid such that the amounts of the aromatic vinyl compound, the β-farnesene, and the conjugated diene compound other than the β-farnesene present in the polymerization reaction system fall within specific ranges, or by sequentially polymerizing each monomer in the polymerization reaction liquid such that it has a specific ratio.

The polymerization reaction can be terminated by adding an alcohol such as methanol or isopropanol as a polymerization terminator. The unhydrogenated block copolymer (X0) can be isolated by pouring the obtained polymerization reaction liquid into a poor solvent such as methanol to precipitate the unhydrogenated block copolymer (X0), or by washing the polymerization reaction liquid with water, followed by separation and drying. Further, examples of the method for isolating the unhydrogenated block copolymer (X0) include a method in which the resin component is coagulated (steam stripped), and a spray drying method in which the polymer solution is brought to a high temperature and a high pressure and sprayed under ordinary pressure to take out the resin component.

When the block copolymer (X) is a triblock copolymer represented by the A-B 1-A, a method for producing the block copolymer (X) includes:
[i] a method of polymerizing the polymer block (A), the polymer block (B-1), and the polymer block (A) in this order;
[ii] a method of producing it by polymerizing the polymer block (A) and the polymer block (B-1) in this order and coupling the terminals of the polymer block (B-1) to each other using a coupling agent.

In the present embodiment, the method [i] is preferable from the viewpoint of efficient production. Note that in the case where the block copolymer (X) further contains the polymer block (B-2), it can be produced by a method according to the above method.

Examples of the coupling agent include divinylbenzene; a polyepoxy compound such as epoxidized 1,2-polybutadiene, epoxidized soybean oil, and tetraglycidyl-1,3-bisaminomethylcyclohexane; a halide such as tin tetrachloride, tetrachlorosilane, trichlorosilane, trichloromethylsilane, dichlorodimethylsilane, and dibromodimethylsilane; an ester compound such as methyl benzoate, ethyl benzoate, phenyl benzoate, diethyl oxalate, diethyl malonate, diethyl adipate, dimethyl phthalate, and dimethyl terephthalate; a carbonate ester compound such as dimethyl carbonate, diethyl carbonate, and diphenyl carbonate; an alkoxysilane compound such as diethoxydimethylsilane, trimethoxymethylsilane, triethoxymethylsilane, tetramethoxysilane, tetraethoxysilane, tetrabutoxysilane, tetrakis (2-ethylhexyloxy) silane, bis (triethoxysilyl) ethane, and 3-aminopropyltriethoxysilane; and 2,4-tolylene diisocyanate.

In this polymerization step, an unmodified block copolymer may be obtained as described above, or a modified block copolymer may be obtained as described later.

In the case of the modified block copolymer, the unhydrogenated block copolymer (X0) may be modified before the hydrogenation step mentioned below. Examples of the functional group that can be introduced include an amino group, an alkoxysilyl group, a hydroxy group, an epoxy group, a carboxy group, a carbonyl group, a mercapto group, an isocyanate group, and an acid anhydride group.

Examples of the modification method of the unhydrogenated block copolymer (X0) include a method of adding a coupling agent such as tin tetrachloride, tetrachlorosilane, dichlorodimethylsilane, dimethyldiethoxysilane, tetramethoxysilane, tetraethoxysilane, 3-aminopropyltriethoxysilane, tetraglycidyl-1,3-bisaminomethylcyclohexane, and 2,4-tolylene diisocyanate, which can react with a polymerization active terminal, a polymerization terminal modifier such as 4,4'-bis (diethylamino) benzophenone, and N-vinylpyrrolidone, or other modifiers described in JP2011-132298A, before adding a polymerization terminator. Further, it is also possible to graft maleic anhydride or the like to the copolymer after isolation.

The position at which the functional group is introduced may be a polymerization terminal or a side chain of the unhydrogenated block copolymer (X0). Further, the functional groups may be used alone or in combination of two or more kinds thereof. The modifier is preferably in the range of 0.01 to 10 molar equivalent with respect to 1 mole of the anionic polymerization initiator.

### (Hydrogenation Step)

The block copolymer (X) may be converted into a hydrogenated block copolymer (X1) by subjecting the unhydrogenated block copolymer (X0) or the modified block copolymer obtained by the above method to a step of hydrogenating.

As the hydrogenation method, a known method can be used. For example, the hydrogenation reaction is performed in the presence of a hydrogenation catalyst such as a Ziegler catalyst; a nickel, platinum, palladium, ruthenium, or rhodium metal catalyst supported on carbon, silica, or diatomaceous earth, or the like; or an organometallic complex having cobalt, nickel, palladium, rhodium, or ruthenium metal, in a solution in which the unhydrogenated block copolymer (X0) is dissolved in a solvent that does not affect the hydrogenation reaction.

In the hydrogenation step, a hydrogenation catalyst may be added to the polymerization reaction liquid containing the unhydrogenated block copolymer (X0) obtained by the above production method to perform the hydrogenation reaction. In the present embodiment, the hydrogenation catalyst is preferably palladium carbon in which palladium is supported on carbon.

In the hydrogenation reaction, the hydrogen pressure is preferably 0.1 to 20 MPa, the reaction temperature is preferably 100 to 200°C, and the reaction time is preferably 1 to 20 hours.

The hydrogenated block copolymer (X1) can be isolated by pouring the hydrogenation reaction liquid obtained in the above step into a poor solvent such as methanol to precipitate the hydrogenated block copolymer (X1), or by washing the hydrogenation reaction liquid with water, followed by separation and drying. In addition, as a method for isolating the hydrogenated block copolymer (X1), it is also possible to use a method in which the resin component is coagulated (steam stripped), or a spray drying method in which the polymer solution is brought to a high temperature and a high pressure and sprayed under ordinary pressure to take out the resin component.

As described above, it is preferable that the block copolymer (X) consists substantially only of the unhydrogenated block copolymer (X0), consists substantially only of the hydrogenated block copolymer (X1) having a degree of hydrogenation of less than 50 mol%, or consists substantially only of both the unhydrogenated block copolymer (X0) and the hydrogenated block copolymer (X1) having a degree of hydrogenation of less than 50 mol%. That is, the degree of hydrogenation of the block copolymer (X) is preferably 0 mol% or more and less than 50 mol%.

The degree of hydrogenation of the block copolymer (X) is preferably 0 to 49 mol%, more preferably 0 to 48 mol%, and further more preferably 0 to 47 mol%, from the viewpoint of easily increasing the heat resistance while ensuring a moderate adhesive property.

The degree of hydrogenation can be controlled within the above range by, for example, controlling the addition amount of the hydrogenation catalyst and the reaction time.

Examples of the carbon-carbon double bond in the conjugated diene compound unit present in the unhydrogenated block copolymer (X0) include a carbon-carbon double bond in the conjugated diene compound unit in the polymer block (B-1), and a carbon-carbon double bond in the conjugated diene compound unit in the polymer block (B-1) and the polymer block (B-2) in the case where the unhydrogenated block copolymer (X0) further contains the polymer block (B-2),.

Note that, in the present specification, the polymer block (B-1) and the polymer block (B-2) in the hydrogenated block copolymer (X1) are hydrogenated, but these are referred to as the "polymer block (B-1)" and the "polymer block (B-2)" in the same manner as before hydrogenation.

Note that the degree of hydrogenation can be calculated from the values obtained by measuring ¹H-NMR of both of the unhydrogenated block copolymer (X0) and the hydrogenated block copolymer (X1), and more specifically, can be calculated by the method described in Examples.

The weight average molecular weight (Mw) of the unhydrogenated block copolymer (X0) is preferably 4,000 to 1,500,000, more preferably 9,000 to 1,000,000, further more preferably 30,000 to 800,000, and yet still further more preferably 50,000 to 500,000, from the viewpoint of coatability and heat resistance.

The molecular weight distribution (Mw/Mn) of the unhydrogenated block copolymer (X0) is preferably 1 to 6, more preferably 1 to 4, further more preferably 1 to 3, still further more preferably 1 to 2. When the molecular weight distribution is within the above range, the variation in viscosity of the unhydrogenated block copolymer (X0) is small, and handling is easy.

The weight average molecular weight (Mw) of the hydrogenated block copolymer (X1) is preferably 4,000 to 1,500,000, more preferably 9,000 to 1,000,000, further more preferably 30,000 to 800,000, and still further more preferably 50,000 to 500,000, from the viewpoint of coatability and heat resistance.

The molecular weight distribution (Mw/Mn) of the hydrogenated block copolymer (X1) is preferably 1 to 6, more preferably 1 to 4, further more preferably 1 to 3, still further more preferably 1 to 2. When the molecular weight distribution is within the above range, the variation in viscosity of the hydrogenated block copolymer (X1) is small, and handling is easy.

Note that the molecular weight distribution (Mw/Mn) in the present specification means a value measured by a method described in Examples described later.

The weight average molecular weight (Mw) of the block copolymer (X) is preferably 30,000 to 450,000, more preferably 35,000 to 400,000, further more preferably 40,000 to 350,000, particularly preferably 45,000 to 300,000, and most preferably 50,000 to 250,000 from the viewpoint of heat resistance and the like.

The weight average molecular weight of the block copolymer (X) can be set within the above range by, for example, adjusting the amount of the monomer with respect to the polymerization initiator.

### <Tackifier (Y)>

The tackifier (Y) can be selected multifariously depending on the application and required performance of the adhesive composition to be obtained.

The tackifier (Y) is not particularly limited, and examples thereof can include a rosinbased compound such as natural rosin, polymerized rosin, modified rosin, glycerol ester of natural rosin, glycerol ester of modified rosin, pentaerythritol ester of natural rosin, pentaerythritol ester of modified rosin, hydrogenated rosin, and pentaerythritol ester of hydrogenated rosin; a terpene-based compound such as a copolymer of natural terpene, a three dimensional polymer of natural terpene, an aromatic modified terpene resin, a hydrogenated product of an aromatic modified terpene resin and a derivative thereof, a terpene phenol resin, a hydrogenated product of a terpene phenol resin and a derivative thereof, a terpene resin (monoterpene, diterpene, triterpene, polyterpene, and the like), a hydrogenated terpene resin, a hydrogenated product of a hydrogenated terpene resin and a derivative thereof; a pinene resin; a petroleum hydrocarbon-based compound such as an an aliphatic petroleum hydrocarbon resin (C5-based resin), a hydrogenated product of an aliphatic petroleum hydrocarbon resin and a derivative thereof, an aromatic petroleum hydrocarbon resin (C9-based resin), a hydrogenated product of an aromatic petroleum hydrocarbon resin, a derivative of a hydrogenated product of an aromatic petroleum hydrocarbon resin, a hydrogenated product of an aromatic modified alicyclic hydrocarbon resin (DCPD-C9-based resin) and/or a derivative thereof, a dicyclopentadiene-based resin, a hydrogenated product of a dicyclopentadiene-based resin and a derivative thereof, a C5/C9 copolymer-based resin, a hydrogenated product of a C5/C9 copolymer-based resin and a derivative thereof, a cycloaliphatic petroleum hydrocarbon resin, and a hydrogenated product of a cycloaliphatic petroleum hydrocarbon resin and a derivative thereof; and an aromatic group-containing resin. Note that the C5/C9 copolymer-based is a copolymer petroleum resin obtained by polymerizing a mixture of a C5 fraction and a C9 fraction as raw materials.

Examples of a commercially available product of the hydrogenated product and a derivative thereof include, but are not particularly limited to, ARKON P90, ARKON P100, ARKON P115, ARKON P125, ARKON P140, ARKON M90, ARKON M100, ARKON M115, ARKON M135, ESTER GUM H, ESTER GUM HP, and HYPALE, all manufactured by Arakawa Chemical Industries, Ltd., Regalite R1010, Regalite R1090, Regalite R1100, Regalite S5100, Regalite R7100, Regalite C6100, Eastotac C100W, Eastotac C100L, Eastotac C100R, Eastotac C115W, Eastotac C115R, Staybelite E, Foral AXE, and Staybelite ester 10E, all manufactured Eastman Chemical Company, CLEARON P105, CLEARON P115, CLEARON P125, CLEARON P135, CLEARON P150, CLEARON M105, CLEARON M115, CLEARON K100, CLEARON K110, CLEARON K4100, CLEARON K4090, and YS POLYSTER UH, all manufactured by Yasuhara Chemical Co., Ltd., Escorez 5340, Escorez 5320, Escorez 5300, Escorez 5380, Escorez 5400, Escorez 227E, Escorez 5600, and Escorez 5690 , all manufactured by Exxon Mobil Corporation, Quintone A100, Quintone B170, Quintone M100, Quintone R100, Quintone S195, Quintone D100, Quintone U185, Quintone DX395, Quintone 390N, Quintone N180, Quintone G100B, Quintone G115, Quintone E200SN, Quintone D200, Quintone 1105, Quintone 1325, and Quintone 1340, all manufactured by ZEON CORPORATION, I-MARV S100, I-MARV S110, I-MARV P100, I-MARV P125, and I-MARV P140, all manufactured by Idemitsu Kosan Co., Ltd., Rikarosin F manufactured by Rika Fine-tech Inc., and T-REZ OP501, T-REZ PR801, T-REZ HA125, and T-REZ HB125, all manufactured by Tonen General Sekiyu K.K..

In addition, regarding a commercially available product of the tackifier other than the above-mentioned various hydrogenated products and derivatives thereof, examples thereof include ESTER GUM AA-L, ESTER GUM A, ESTER GUM AAV, ESTER GUM, ESTER GUM 105, ESTER GUM AT, PENSEL A, PENSEL AZ, PENSEL C, PENSEL D125, PENSEL D160, SUPER ESTER, TAMANOL, PINECRYSTAL, and ARDYME, all manufactured by Arakawa Chemical Industries, Ltd., Wingtack 10, Wingtack 95, Wingtack 98, Wingtack Extra, Wingtack RWT-7850, Wingtack PLUS, Wingtack ET, Wingtack STS, Wingtack 86, and Norsolnene, all manufactured by Cray Valley, Piccotac 8095, Piccotac 1095, Piccotac 1098, and Piccotac 1100, all manufactured by Eastman Chemical Company, Escorez 1102, Escorez 1202, Escorez 1204LS, Escorez 1304, Escorez 1310, Escorez 1315, Escorez 224, Escorez 2101, Escorez 213, and Escorez 807, all manufactured by Exxon Mobil Corporation, Sylvagum and Sylvalite manufactured by Arizona Chemical, Piccolyte manufactured by Ashland, YS RESIN PX, YS RESIN PXN, YS POLYSTAR U, YS POLYSTAR T, YS POLYSTAR S, YS POLYSTAR G, YS POLYSTAR N, YS POLYSTAR K, YS POLYSTAR TH, YS RESIN TO, YS RESIN TR, and YS RESIN SX, all manufactured by Yasuhara Chemical Co., Ltd., and Marukarez M manufactured by Maruzen Petrochemical Co., Ltd., as a commercially available product.

The aliphatic-based tackifier such as an aliphatic petroleum hydrocarbon resin (C5-based resin), a hydrogenated product of an aliphatic petroleum hydrocarbon resin (C5-based resin) and a derivative thereof, a C5/C9 copolymer-based resin, a hydrogenated product of a C5/C9 copolymer-based resin and a derivative thereof is a tackifier having a content of an aliphatic hydrocarbon-group of preferably 50% by mass or more, more preferably 70% by mass or more, further more preferably 80% by mass or more, still further more preferably 88% by mass or more, and even still further more preferably 95% by mass or more.

The aliphatic-based tackifier can be produced by homopolymerizing or copolymerizing a monomer having an aliphatic group and a polymerizable unsaturated group.

Examples of the monomer having an aliphatic group and a polymerizable unsaturated group include, but are not limited to, natural and synthetic terpene containing, a C5 or C6 cyclopentyl or cylcohexyl group.

Further, examples of other monomers that can be used in the copolymerization include, but are not limited to, 1,3-butadiene, cis-1,3-pentadiene, trans-1,3-pentadiene, 2-methyl-1,3-butadiene, 2-methyl-2-butene, cyclopentadiene, dicyclopentadiene, terpene, and terpene-phenol resin.

In the aromatic-based tackifier such as the aromatic petroleum hydrocarbon resin (C9-based resin) and the C5/C9 copolymer-based resin, the content of the aromatic-based hydrocarbon group is preferably 50% by mass or more, more preferably 70% by mass or more, further more preferably 80% by mass or more, still further more preferably 88% by mass or more, and even still furthermore preferably 95% by mass or more.

The aromatic-based tackifier can be produced by homopolymerizing or copolymerizing a monomer having each of an aromatic group and a polymerizable unsaturated group.

Examples of the monomer having each of an aromatic group and a polymerizable unsaturated group include, but are not limited to, styrene, α-methylstyrene, vinyltoluene, methoxystyrene, tert-butylstyrene, chlorostyrene, and an indene monomer (including methylindene).

Further, examples of other monomers that can be used in the copolymerization include, but are not particularly limited to, 1,3-butadiene, cis-1,3-pentadiene, trans-1,3-pentadiene, 2-methyl-1,3-butadiene, 2-methyl-2-butene, cyclopentadiene, dicyclopentadiene, terpene, and a terpene-phenol resin.

Examples of the commercially available product of the aromatic-based tackifier include Endex 155, Kristalex1120, Kristalex 3085, Kristalex 3100, Kristalex 5140, Kristalex F100, Plastolyn 240, Plastolyn 290, and Piccotex 100, all manufactured by Eastman Chemical Company, and Nitto Resin Coumarone G-90, V-120, and V-120S, all manufactured by Nitto Chemical Co., Ltd.

Further, it is also possible to use a tackifier having an affinity for the block of the glass phase of the block copolymer, such as a resin having an aromatic ring between molecules. Examples of such a resin include, but are not particularly limited to, an aromatic group-containing resin such as a homopolymer or a copolymer containing vinyltoluene, styrene, α-methylstyrene, coumarone, or indene as a constituent unit. Further, among these, KristAlEx and PlAstolyN (trade names, manufactured by Eastman Chemical Company) having α-methylstyrene are preferable.

These tackifiers can be used alone or in combination of two or more kinds thereof.

The content of the tackifier (Y) is preferably 50 to 170 parts by mass, more preferably 60 to 150 parts by mass, and further more preferably 70 to 120 parts by mass, with respect to 100 parts by mass of the block copolymer (X) from the viewpoint of allowing the adhesive composition to express good adhesive property.

### <Plasticizer (Z)>

The adhesive composition may contain a plasticizer (Z). When the adhesive composition contains the plasticizer (Z), the coatability and the adhesive property are improved.

Examples of the plasticizer (Z) include a liquid rubber component (Za), a biomass-derived plasticizer (Zb), a synthetic plasticizer (Zc), and a vegetable oil (Zd). These are preferably plasticizers that do not have a carboxy group.

These can be contained alone or in combination of two or more kinds thereof.

In one embodiment of the present invention, the adhesive composition further contains at least one selected from the group consisting of a liquid rubber component (Za), a biomass-derived plasticizer (Zb), and a synthetic plasticizer (Zc).

### (Liquid Rubber Component (Za))

The liquid rubber component (Za) contained in the adhesive composition is a synthetic rubber having a melt viscosity at 38°C (hereinafter also referred to as "38°C melt viscosity") of 2,000 Pa·s or less.

The 38°C melt viscosity of the liquid rubber component (Za) can be measured using a Brookfield viscometer (manufactured by BROOKFIELD ENGINEERING LABS. INC.).

The liquid rubber component (Za) may be a liquid rubber that is not hydrogenated, or may be a hydrogenated product of a liquid rubber. In the present specification, the "liquid rubber component (Za)" includes a liquid rubber before hydrogenation (hereinafter sometimes referred to as an unhydrogenated liquid rubber (Za0)) and a liquid rubber obtained by hydrogenating the unhydrogenated liquid rubber (Za0) (hereinafter sometimes referred to as a hydrogenated liquid rubber (Za1)). The liquid rubber component (Za) may contain both the unhydrogenated liquid rubber (Za0) and the hydrogenated liquid rubber (Za1).

Hereinafter, the liquid rubber component (Za) is described, but unless otherwise specified, these descriptions apply to both the unhydrogenated liquid rubber (Za0) and the hydrogenated liquid rubber (Za1).

Examples of the liquid rubber component (Za) include a liquid diene-based rubber such as liquid polyfarnesene rubber, liquid isoprene rubber, liquid butadiene rubber, and liquid styrene-butadiene rubber. Among these, from the viewpoint of the balance between the melt viscosity at 38°C and the flexibility of the adhesive composition, liquid polyfarnesene rubber and liquid butadiene rubber are preferable, and liquid polyfarnesene rubber is more preferable.

The liquid diene-based rubber may contain other monomer units such as a conjugated diene compound unit other than β-farnesene, isoprene, and butadiene, and an aromatic vinyl compound unit.

The liquid diene-based rubber is a polymer containing at least one of β-farnesene, isoprene, and butadiene units in an amount of 50% by mass or more with respect to all monomer units constituting the polymer. The total content of the β-farnesene unit, the isoprene unit, and the butadiene unit is preferably 60% by mass or more and 100% by mass or less, and more preferably 70% by mass or more and 100% by mass or less, with respect to the total monomer units constituting the liquid diene-based rubber.

The liquid rubber component (Za) can be prepared by a known method, for example, by polymerizing at least one selected from the group consisting of β-farnesene, isoprene, and butadiene, and a monomer to be added as necessary by a method such as emulsion polymerization or solution polymerization. Among them, the solution polymerization method is particularly preferable.

The hydrogenated liquid rubber (Za1) can be obtained by hydrogenating the polymerization product of the monomer (that is, the unhydrogenated liquid rubber (Za0)) in the same manner as in the method for producing the hydrogenated block copolymer (X1) mentioned above.

From the viewpoint of compatibility with the block copolymer (X), adhesive property, and heat resistance, it is preferable that the adhesive composition further contains a liquid rubber component (Za), and the liquid rubber component (Za) contains at least one selected from the group consisting of an unhydrogenated liquid rubber (Za0) which is a liquid rubber that is not hydrogenated, and a hydrogenated liquid rubber (Za1) which is a hydrogenated liquid rubber and has a degree of hydrogenation of 90 mol% or less.

The liquid rubber component (Za) preferably consists substantially only of the unhydrogenated liquid rubber (Za0), consists substantially only of the hydrogenated liquid rubber (Za1) having a degree of hydrogenation of 90 mol% or less, or consists substantially only of both the unhydrogenated liquid rubber (Za0) and the hydrogenated liquid rubber (Za1) having a degree of hydrogenation of 90 mol% or less, and more preferably consists substantially only of the unhydrogenated liquid rubber (Za0).

Here, the "substantially" means that the rubber composition may be an embodiment in which a component such as a hydrogenated liquid rubber having a degree of hydrogenation of more than 90 mol%, which is inevitably present in the course of preparing the liquid rubber component, is contained, in addition to an embodiment purely composed only of the unhydrogenated liquid rubber (Za0) and an embodiment purely composed only of the hydrogenated liquid rubber (Za1).

In the adhesive composition, the content of the liquid rubber component (Za) with respect to 100 parts by mass of the block copolymer (X) is preferably 10 parts by mass or more, more preferably 15 parts by mass or more, further more preferably 20 parts by mass or more, still further more preferably 30 parts by mass or more, still further more preferably 31 parts by mass or more, still further more preferably 40 parts by mass or more, still further more preferably 46 parts by mass or more, still further more preferably 50 parts by mass or more, and particularly preferably 51 parts by mass or more, and from the viewpoint of suppressing bleeding, preferably 300 parts by mass or less, more preferably 270 parts by mass or less, further more preferably 250 parts by mass or less, and still further more preferably 230 parts by mass or less. In other words, the content of the liquid rubber component (Za) is preferably 10 to 300 parts by mass with respect to 100 parts by mass of the block copolymer (X).

From the viewpoint of dispersibility and heat resistance, the weight average molecular weight of the liquid rubber component (Za) is preferably 2,000 to 30,000, more preferably 2,500 to 25,000, further more preferably 3,000 to 20,000, still further more preferably 3,500 to 17,000, and particularly preferably 4,000 to 15,000.

The weight average molecular weight of the liquid rubber component (Za) can be set within the above range by, for example, adjusting the amount of the conjugated diene compound with respect to the polymerization initiator used for the polymerization.

The 38°C melt viscosity of the liquid rubber component (Za) is preferably 0.1 to 1,000 Pa·s, more preferably 0.2 to 500 Pa·s, further more preferably 0.3 to 300 Pa·s, still further more preferably 0.3 to 100 Pa·s, from the viewpoint of ensuring the dispersibility in the block copolymer (X) and the adhesive property.

The 38°C melt viscosity of the liquid rubber component (Za) can be set within the above range by, for example, adjusting the kind of the conjugated diene compound to be used or the degree of hydrogenation of the polymer thereof, or adjusting the weight average molecular weight of the liquid rubber component (Za) to be used.

The weight average molecular weight (Mw) of the unhydrogenated liquid rubber (Za0) is preferably 3,000 to 200,000, more preferably 4,000 to 100,000, further more preferably 5,000 to 50,000, and still further more preferably 8,000 to 15,000, from the viewpoint of the adhesive property.

The molecular weight distribution (Mw/Mn) of the unhydrogenated liquid rubber (Za0) is preferably 1 to 5, more preferably 1 to 4, further more preferably 1 to 3, and still furthermore preferably 1 to 2. When the molecular weight distribution is within the above range, the variation in the viscosity of the unhydrogenated liquid rubber (Za0) is small, and handling is easy.

The weight average molecular weight (Mw) of the hydrogenated liquid rubber (Za1) is preferably 3,000 to 300,000, more preferably 5,000 to 250,000, further more preferably 10,000 to 200,000, and still further more preferably 15,000 to 150,000, from the viewpoint of the adhesive property.

The molecular weight distribution (Mw/Mn) of the hydrogenated liquid rubber (Za1) is preferably 1 to 5, more preferably 1 to 4, further more preferably 1 to 3, and still further more preferably 1 to 2. When the molecular weight distribution is within the above range, variation in the viscosity of the hydrogenated liquid rubber (Za1) is small, and handling is easy.

### (Biomass-Derived Plasticizer (Zb))

The adhesive composition may contain a biomass-derived plasticizer (Zb).

From the viewpoint of oil bleeding, the biomass-derived plasticizer (Zb) is preferably a biomass-derived plasticizer that does not have a carboxy group.

Specific preferable examples of the biomass-derived plasticizer (Zb) include a compound represented by the following general formula (1) and a compound represented by the following general formula (2). These can be used alone or in combination of two or more kinds thereof.

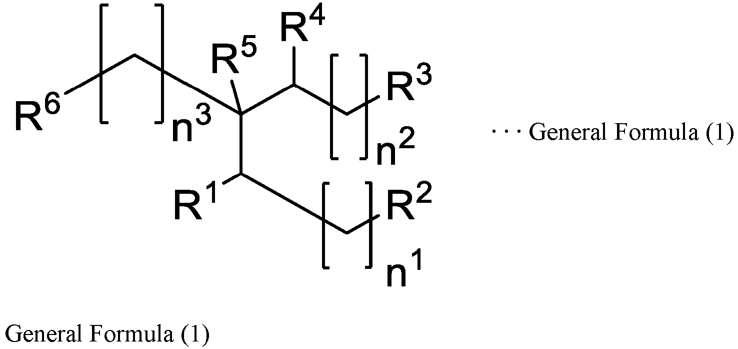

Here, in the general formula (1), n¹ to n³ are each independently 1 or 3, R¹ to R⁶ are each independently hydrogen atoms or unsubstituted hydrocarbon groups, the total number of carbon atoms of R¹ and R² is 14, the total number of carbon atoms of R³ and R⁴ is 14, the total number of carbon atoms of R⁵ and R⁶ is 14, and R¹ to R⁶ may have a branched structure.

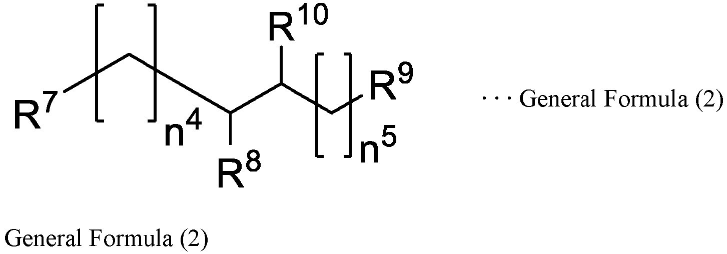

Here, in the general formula (2), n⁴ and n⁵ are each independently 1 or 3, R⁷ to R¹⁰ are each independently hydrogen atoms or unsubstituted hydrocarbon groups, the total number of carbon atoms of R⁷ and R⁸ is 14, the total number of carbon atoms of R⁹ and R¹⁰ is 14, and R⁷ to R¹⁰ may have a branched structure.

### (Specific Examples of Compound Represented by General Formula (1))

Specific examples of the compound represented by the general formula (1) include a compound represented by the following structural formulae (1-1) to (1-8). 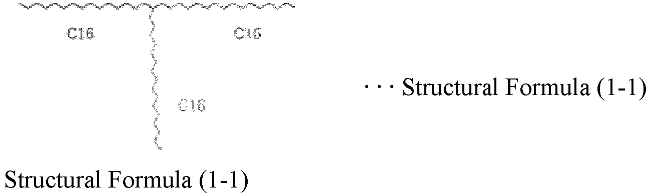 (The compound represented by the structural formula (1-1) is a compound of, in the general formula (1), R¹=H, R²=C₁₄H₂₉, R³=C₁₄H₂₉, R⁴=H, R⁵=H, R⁶=C₁₄H₂₉, n¹=1, n²=1, and n³=1.) 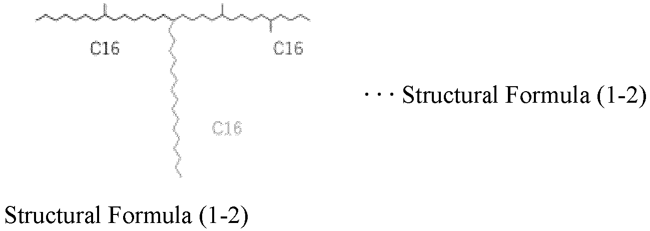 (The compound represented by the structural formula (1-2) is a compound in which, in the general formula (1), R¹=H, R²=C₁₄H₂₉, R³=C₁₄H₂₉ (branched), R⁴=H, R⁵=H, R⁶=C₁₄H₂₉ (branched), n¹=1, n²=1, and n³=1.) 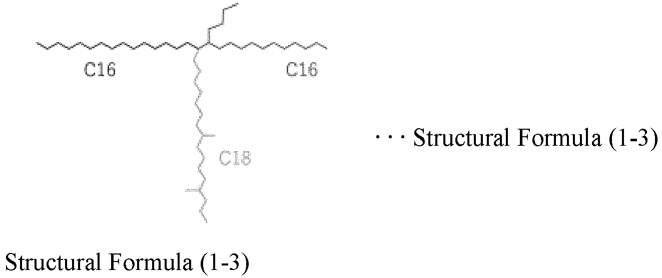 (The compound represented by the structural formula (1-3) is a compound of, in the general formula (1), R¹=H, R²=C₁₄H₂₉ (branched), R³=C₁₀H₂₁, R⁴=C₄H₉, R⁵=H, R⁶=C₁₄H₂₉, n¹=3, n²=1, and n³=1.) 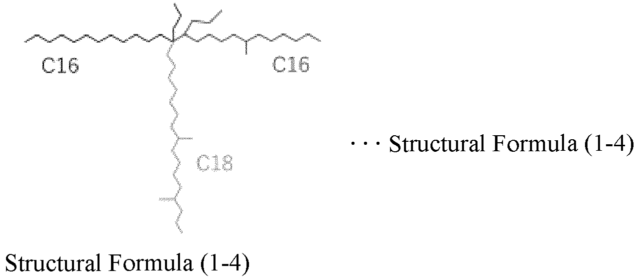 (The compound represented by the structural formula (1-4) is a compound of, in the general formula (1), R¹=H, R²=C₁₄H₂₉ (branched), R³=C₁₁H₂₃ (branched), R⁴=C₃H₇, R⁵=C₃H₇, R⁶=C₁₁H₂₃, n¹=3, n²=1, n³=1.) 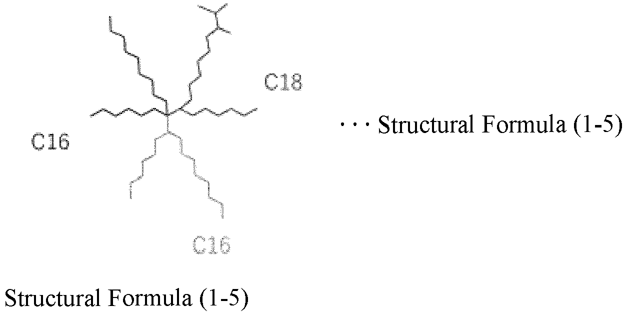 (The compound represented by the structural formula (1-5) is a compound of, in the general formula (1), R¹=C₆H₁₃, R²=C₈H₁₇, R³=C₃H₇, R⁴=C₁₁H₂₃ (branched), R⁵=C₉H₁₉, R⁶=C₅H₁₁, n¹=1, n²=3, and n³=1.) 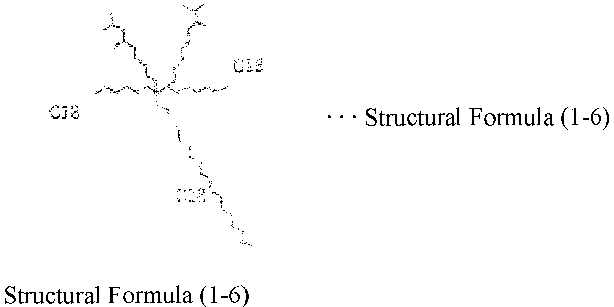 (The compound represented by the structural formula (1-6) is a compound of, in the general formula (1), R¹=H, R²=C₁₄H₂₉, R³=C₃H₇, R⁴=C₁₁H₂₃(branched), R⁵=C₁₁H₂₃ (branched), R⁶=C₃H₇, n¹=3, n²=3, and n³= 3.) 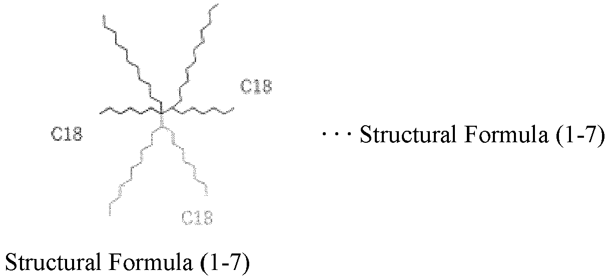 (The compound represented by the structural formula (1-7) is a compound of, in the general formula (1), R¹=C₁₀H₂₁, R² =C₄H₉, R³=C₃H₇, R⁴=C₁₁H₂₃, R⁵=C₁₁H₂₃, R⁶=C₃H₇, n¹=3, n²= 3, and n³= 3.) 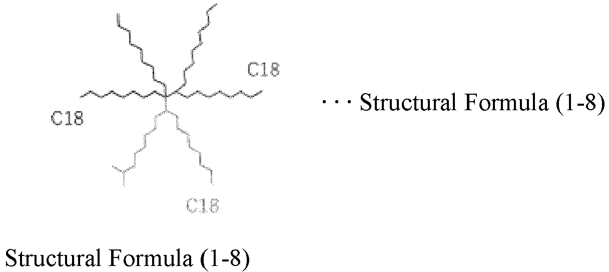 (The compound represented by the structural formula (1-8) is a compound of, in the general formula (1), R¹=C₉H₁₉ (branched), R²=C₅H₁₁, R³=C₅H₁₁, R⁴=C₉H₁₉, R⁵=C₉H₁₉, R⁶=C₅H₁₁, n¹=3, n²=3, and n³=3.)

### (Specific Examples of Compound Represented by General Formula (2))

Specific examples of the compound represented by the general formula (2) include a compound represented by the following structural formulae (2-1) to (2-8). 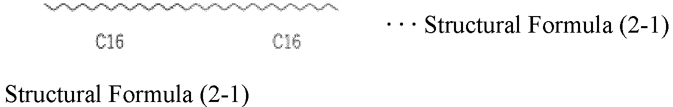 (The compound represented by the structural formula (2-1) is a compound of, in the general formula (2), R⁷=C₁₄H₂₉, R⁸=H, R⁹=C₁₄H₂₉, R¹⁰=H, n⁴=1, and n⁵=1.) 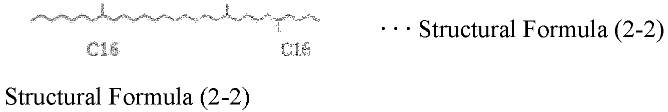 (The compound represented by the structural formula (2-2) is a compound of, in the general formula (2), R⁷=C₁₄H₂₉ (branched), R⁸=H, R⁹=C₁₄H₂₉ (branched), R¹⁰=H, n⁴=1, and n⁵=1.) 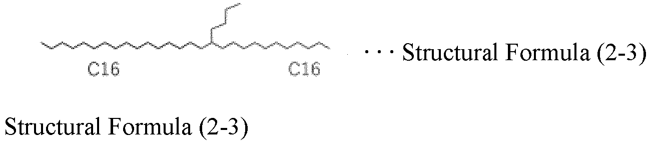 (The compound represented by the structural formula (2-3) is a compound, of, in the general formula (2), R⁷=C₁₄H₂₉, R⁸=H, R⁹=C₁₀H₂₁, R¹⁰=C₄H₉, n⁴=1, and n⁵=1.) 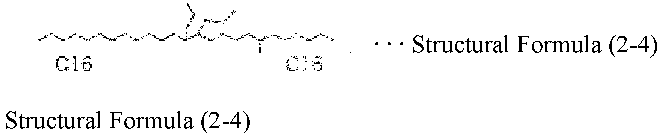 (The compound represented by the structural formula (2-4) is a compound of, in the general formula (2), R⁷=C₁₁H₂₃, R⁸=C₃H₇, R⁹=C₁₁H₂₃ (branched), R¹⁰=C₃H₇, n⁴=1, and n⁵=1.) 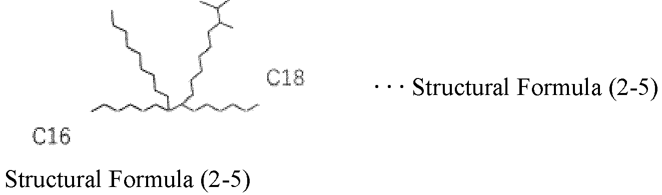 (The compound represented by the structural formula (2-5) is a compound of, in the general formula (2), R⁷=C₅H₁₁, R⁸=C₉H₁₉, R⁹=C₃H₇, R¹⁰=C₁₁H₂₃ (branched), n⁴=1, and n⁵=3.) 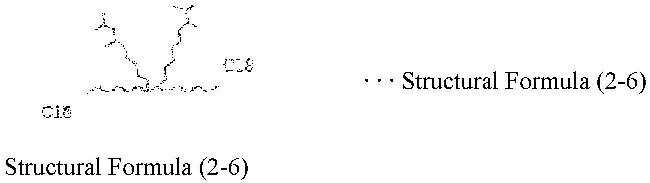 (The compound represented by the structural formula (2-6) is a compound of, in the general formula (2), R⁷=C₃H₇, R⁸=C₁₁H₂₃ (branched), R⁹=C₃H₇, R¹⁰=C₁₁H₂₃(branched), n⁴=3, and n⁵=3.) 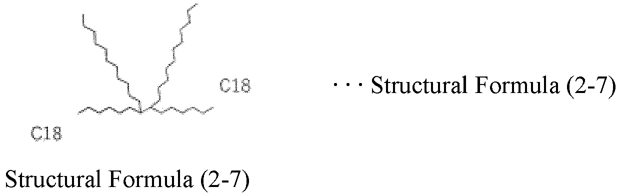 (The compound represented by the structural formula (2-7) is a compound of, in the general formula (2), R⁷=C₃H₇, R⁸=C₁₁H₂₃, R⁹=C₃H₇, R¹⁰=C₁₁H₂₃, n⁴=3, and n⁵=3.) 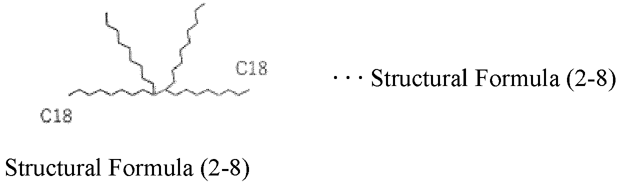 (The compound represented by the structural formula (2-8) is a compound of, in the general formula (2), R⁷=C₅H₁₁, R⁸=C₉H₁₉, R⁹= C₅H₁₁, R¹⁰=C₉H₁₉, n⁴=3, and n⁵=3.)

Examples of a product of the biomass-derived plasticizer (Zb) include: product name: VIVA-B-FIX10227, manufactured by H&R Group (mixture having a structure represented by the general formula (1), biobased content (ASTM D6866-21): 100% by mass).

The content of the biomass-derived plasticizer (Zb) in the adhesive composition is preferably 3% by mass or more, more preferably 5% by mass or more, and further more preferably 8% by mass or more, and is preferably 40% by mass or less, more preferably 35% by mass or less, and further more preferably 30% by mass or less, from the viewpoint of making it easy to ensure a moderate adhesive property and from the viewpoint of coatability. In other words, the content of the biomass-derived plasticizer (Zb) in the adhesive composition is preferably 3 to 40% by mass.

When the total of the biomass-derived plasticizer (Zb) and the other plasticizer is 100 parts by mass, the content of the biomass-derived plasticizer (Zb) is preferably 40 parts by mass or more, more preferably 60 parts by mass or more, further more preferably 80 parts by mass or more, still further more preferably 90 parts by mass or more, particularly preferably 95 parts by mass or more, and most preferably 100 parts by mass.

The biobased content of the biomass-derived plasticizer (Zb) is not particularly limited, and is preferably 70% by mass or more, more preferably 80% by mass or more, further more preferably 85% by mass or more, still further more preferably 90% by mass or more, even still further more preferably 95% by mass or more, and most preferably 100% by mass, from the viewpoint of further reducing the environmental load.

The kinematic viscosity at 40°C of the biomass-derived plasticizer (Zb) is not particularly limited, and is preferably 100 cSt or less, more preferably 80 cSt or less, and further more preferably 60 cSt or less.

The melting point of the biomass-derived plasticizer (Zb) is not particularly limited, and is preferably -70°C or higher, more preferably -60°C or higher, and further more preferably -50°C or higher, and is preferably 20°C or lower, more preferably 10°C or lower, and further more preferably 0°C or lower.

### (Synthetic Plasticizer (Zc))

Examples of the synthetic plasticizer (Zc) include an oil-based softener such as paraffin-based, naphthene-based, and aromatic-based process oil, mineral oil, and white oil; a phthalic acid derivative such as dioctyl phthalate and dibutyl phthalate; a liquid co-oligomer of ethylene and α-olefin; liquid paraffin; polybutene; low molecular weight polyisobutylene; a liquid polydiene such as liquid polybutadiene, liquid polyisoprene, liquid polyisoprene/butadiene copolymer, liquid styrene/butadiene copolymer, and liquid styrene/isoprene copolymer; and a hydrogenated product or a modified product thereof. These may be used alone or in combination of two or more kinds thereof.

Among these, from the viewpoint of compatibility with the block copolymer (X), paraffin-based and naphthene-based process oil; liquid co-oligomer of ethylene and an α-olefin; liquid paraffin; and low molecular weight polyisobutylene are preferable, and paraffine-based and naphthene-based process oil is more preferable.

The content of the synthetic plasticizer (Zc) in the adhesive composition is preferably 3% by mass or more, more preferably 5% by mass or more, and further more preferably 8% by mass or more, and is preferably 40% by mass or less, more preferably 35% by mass or less, and further more preferably 30% by mass or less, from the viewpoint of making it easy to secure a moderate adhesive property and from the viewpoint of coatability. In other words, the content of the synthetic plasticizer (Zc) in the adhesive composition is preferably 3 to 40% by mass.

### (Vegetable Oil (Zd))

Examples of the vegetable oil (Zd) include a plant-derived fat and oil such as castor oil, cottonseed oil, flaxseed oil, safflower oil, rapeseed oil, soybean oil, coconut oil, Japan wax, pine oil, corn oil, peanut oil, olive oil, palm oil, palm olein, and palm stearin, and a fat and oil such as transesterified oil, hydrogenated oil, and fractionated oil thereof. These can be used alone or in combination of two or more kinds thereof.

Among these, from the viewpoint of compatibility with the block copolymer (X), crude palm oil, refined palm oil, crude palm stearin, refined palm stearin, crude palm olein, refined palm olein, and a hydrogenated product thereof are preferable, and a hydrogenated product of refined palm stearin is more preferable.

The biobased content of the vegetable oil (Zd) is preferably 10% by mass or more, more preferably 30% by mass or more, further more preferably 50% by mass or more, still further more preferably 70% by mass or more, and still further more preferably 80% by mass or more.

The content of the vegetable oil (Zd) in the adhesive composition is preferably 3% by mass or more, more preferably 5% by mass or more, and further more preferably 8% by mass or more , and is preferably 40% by mass or less, more preferably 35% by mass or less, and further more preferably 30% by mass or less, from the viewpoint of making it easy to secure a moderate adhesive property and from the viewpoint of coatability. **In** other words, the content of the vegetable oil (Zd) in the adhesive composition is preferably 3 to 40% by mass.

### <Other Components>

The adhesive composition may contain a component other than the block copolymer (X), the tackifier (Y), and the plasticizer (Z).

Examples of such a component include an antioxidant, a crosslinking agent, a photoradical polymerization initiator, a heat aging inhibitor, a light stabilizer, an antistatic agent, a mold release agent, a flame retardant, a foaming agent, a pigment, a dye, and a whitening agent. Further, the adhesive composition may contain a solvent as mentioned later described in the section of "Method for Producing Adhesive Composition". Hereinafter, other representative components are described.

### (Antioxidant)

Examples of the antioxidant include a hindered phenol-based antioxidant, a phosphorus-based antioxidant, a hydroxylamine-based antioxidant, a hindered phenol/phosphorus mixture-based antioxidant, and an oxygen absorber.

Examples of the hindered phenol-based antioxidant include IRGANOX 1010 (manufactured by BASF), ADK STAB AO-60 (manufactured by ADEKA Corporation), SUMILIZER BP-101 (manufactured by Sumitomo Chemical Co., Ltd.) (pentaerythrityl·tetrakis [3-(3,5-di-t-butyl-4-hydroxyphenyl) propionate]), IRGANOX 1035 (manufactured by BASF) (2,2-thio-diethylene bis [3-(3,5-di-t-butyl-4-hydroxyphenyl) propionate]), IRGANOX 1076 (manufactured by BASF) (octadecyl-3-(3,5-di-t-butyl-4-hydroxyphenyl) propionate), IRGANOX 1098 (manufactured by BASF) (N,N'-hexamethylene bis (3,5-di-t-butyl-4-hydroxy hydrocinnamamide), IRGANOX 1135 (manufactured by BASF) (isooctyl-3-(3,5-di-t-butyl-4-hydroxyphenyl) propionate), IRGANOX 1330 (manufactured by BASF) (1,3,5-trimethyl-2,4,6-tris (3,5-di-t-butyl-4-hydroxybenzyl) benzene), IRGANOX 1726 (manufactured by BASF) (4,6-bis (dodecylthiomethyl)-O-cresol), IRGANOX 1425 (manufactured by BASF) (bis (3,5-di-t-butyl-4-hydroxybenzylphosphonate ethyl) calcium (50%) and polyethylene wax (50%)), IRGANOX 1520 (manufactured by BASF) (2,4-bis [(octylthio)methyl)-O-cresol), IRGANOX 245 (manufactured by BASF) (triethylene glycolbis-[3-(3-t-butyl-5-methyl-4-hydroxyphenyl) propionate]), IRGANOX 259 (manufactured by BASF) (1,6-hexanediol-bis [3-(3,5-di-t-butyl-4-hydroxyphenyl) propionate]), IRGANOX 3114 (manufactured by BASF) (tris-(3,5-di-t-butyl-4-hydroxybenzyl)-isocyanurate), IRGANOX 5057 (manufactured by BASF) (octylated diphenylamine), IRGANOX 565 (manufactured by BASF) (2,4-bis-(n-octylthio)-6-(4-hydroxy-3,5-di-t-butylanilino)-1,3,5-triazine), CANOXCY 1790 (Manufactured by Sun Chemical Company Ltd.) (1,3,5-tris(4-t-butyl-3-hydroxy-2,6-dimethylbenzyl) isocyanuric acid), ADK STAB AO-40 (manufactured by ADEKA Corporation), SUMILIZER BBM (manufactured by Sumitomo Chemical Co., Ltd.) (4,4'-butyliden bis(3-methyl-6-t-butylphenol)), ADK STAB AO-50 (manufactured by ADEKA Corporation), SUMILIZER BP-76 (manufactured by Sumitomo Chemical Co., Ltd.) (stearyl-β-(3,5-di-t-butyl-4-hydroxyphenyl) propionate), ADK STAB AO-80 (manufactured by ADEKA Corporation), and SUMILIZER GA-80(manufactured by Sumitomo Chemical Co., Ltd.) (3,9-bis[1,1-dimethyl-2-[β-(3-t-butyl-4-hydroxy-5-methylphenyl) propionyloxy] ethyl] 2,4,8,10-tetraoxaspiro[5,5]-undecane).

Examples of the phosphorus-based antioxidant include IRGAFOS 12 (manufactured by BASF, molecular weight of 1462.9) (6,6',6"-[nitrilotris (ethyleneoxy)] tris (2,4,8,10-tetra-tert-butylbenzo [d, f] [1,3,2] dioxaphosphepin)), IRGAFO S38 (manufactured by BASF, molecular weight of 514) (ethyl bis (2,4-di-tert-butyl-6-methylphenyl) phosphite), IRGAFOS 168 (manufactured by BASF, molecular weight of 646), ADK STAB 2112 (manufactured by ADEKA Corporation), SUMILIZER P-16 (manufactured by Sumitomo Chemical Co., Ltd.) (tris(2,4-di-t-butylphenyl) phosphite), ADK STAB PEP-8 (manufactured by ADEKA Corporation) (distearyl pentaerythritol diphosphite), and ADK STAB PEP-36 (manufactured by ADEKA Corporation) (cyclic neopentanetetrayl bis (2,6-di-t-butyl-4-methylphenyl) phosphite).

Examples of the hydroxylamine-based antioxidant include IRGASTAB FS 042 (manufactured by BASF) (N,N-dioctadecylhydroxylamine).

Examples of the hindered phenol/phosphorus mixture-based antioxidant include IRGANOX B 225 (manufactured by BASF) (IRGAFOS 168: IRGANOX1010 = 1:1), IRGANOX 215 (manufactured by BASF) (IRGAFOS 168: IRGANOX1010 = 2:1), IRGANOX 220 (manufactured by BASF) (IRGAFOS 168: IRGANOX 1010 = 3:1), and IRGANOX 921 (manufactured by BASF) (IRGAFOS 168: IRGANOX 1010 = 2:1).

Examples of the oxygen absorber include an iron powder oxygen absorber. Usually, the iron powder oxygen absorber is used in combination with 0.1 to 50 parts by weight of a halogenated metal with respect to 100 parts by weight of iron powder having a surface area of 0.5 m²/g or more, the halogenated metal is, for example, a halide such as chloride, bromide and iodide of an alkali metal or an alkaline earth metal such as sodium chloride, sodium bromide, calcium chloride and magnesium chloride. This may be a mixture of both, or a surface of the iron powder may be coated with the halogenated metal. Note that the oxidation of iron by oxygen can be further promoted by further combining the oxygen absorber used in the present invention with a porous particle such as zeolite impregnated with water.

The content of the antioxidant is not particularly limited, and is preferably 0.01 to 10 parts by mass, more preferably 0.05 to 7 parts by mass, and further more preferably 0.1 to 5 parts by mass, with respect to 100 parts by mass of the total of the block copolymer (X), the tackifier resin (Y), and the plasticizer (Z).

### (Crosslinking Agent)

When the adhesive composition contains a crosslinking agent, the heat resistance of the adhesive composition can be further improved by crosslinking at least the block copolymer (X) with the crosslinking agent. In addition, when the adhesive composition contains a crosslinking agent and a photoradical polymerization initiator, the adhesive property of the adhesive composition can be reduced by irradiation with light such as UV light, and it can be preferably used for an application or an adhesive product required to have a property of being able to be peeled off from an adherend when temporary fixing of the adherend is unnecessary, such as a dicing tape for temporary fixing of a semiconductor wafer.

The crosslinking agent is preferably a polythiol derived from mercaptocarboxylic acid, and more preferably a polythiol derived from 3-mercaptopropionic acid. The polythiol (B) preferably has a plurality of mercaptoacyloxy groups in the molecule, and more preferably has 2 to 6 mercaptoacyloxy groups. Here, specific examples of the mercaptoacyloxy group include a 3-mercaptopropionyloxy group [HS-(CH₂)₂-COO-], and a 3-mercaptobutyloxy group [HS-CH(CH₃)-CH₂-COO-], and a 3-mercaptopropionyloxy group is preferable. When the polythiol (B) derived from the mercaptocarboxylic acid is blended with, for example, a photoradical polymerization initiator or the like, a thiyl radical is generated by a radical derived from the photoradical polymerization initiator, and the thiyl radical is added to an unsaturated bond of an allyl ether group and/or a vinyl ether to promote a curing (crosslinking) reaction.

Specific preferable examples of the polythiol (B) include tetraethylene glycol bis (3-mercaptopropionate) represented by the following chemical formula (I), trimethylolpropane tris (3-mercaptopropionate) represented by the following chemical formula (II), tris [(3-mercaptopropionyloxy)-ethyl] isocyanurate represented by the following chemical formula (III), pentaerythritol tetrakis (3-mercaptopropionate) represented by the following chemical formula (IV), dipentaerythritol hexakis (3-mercaptopropionate) represented by the following chemical formula (V), 1,4-bis (3-mercaptobutyryloxy) butane represented by the following chemical formula (VI), pentaerythritol tetrakis (3-mercaptobutyrate) represented by the following chemical formula (VII), 1,3,5-tris (3-mercaptobutyloxyethyl)-1,3,5-triazine-2,4,6 (1H, 3H, 5H)-trione represented by the following chemical formula (VIII), 1,4-bis (3-mercaptobutyryloxy) butane represented by the following chemical formula (IX), pentaerythritol tetrakis (3-mercaptobutyrate) represented by the following chemical formula (X), 1,3,5-tris (2-(3-sulfanylbutanoyloxy) ethyl)-1,3,5-triazinan-2,4,6-trione represented by the following chemical formula (XI), trimethylolpropane tris (3-mercaptobutyrate) represented by the following chemical formula (XII), 1,4-butanediol bis (3-mercaptopropionate) represented by the following chemical formula (XIII), and tris (mercaptoacetic acid) trimethylolpropane represented by the following chemical formula (XIIV). Note that these polythiols (B) may be used alone or in combination of two or more kinds thereof.

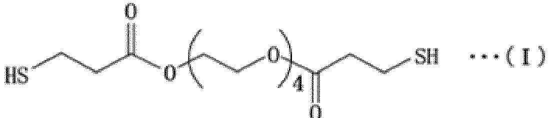

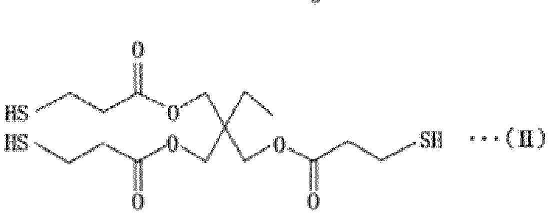

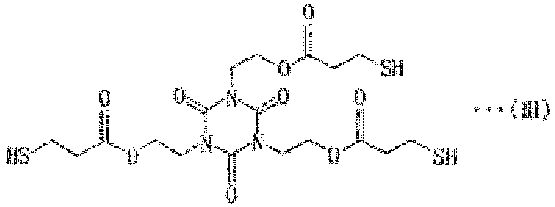

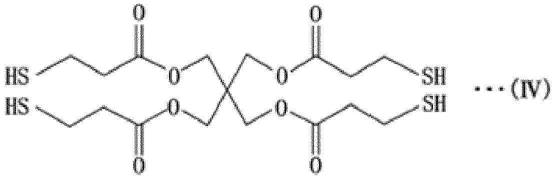

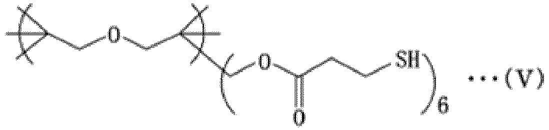

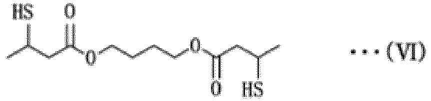

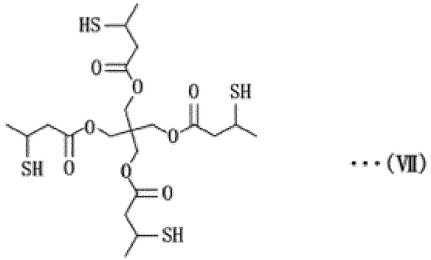

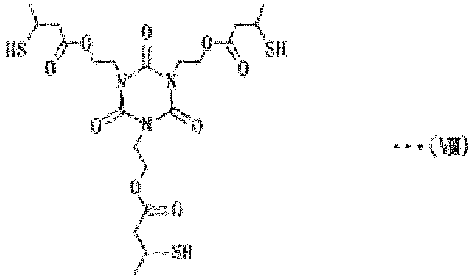

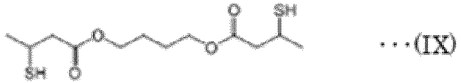

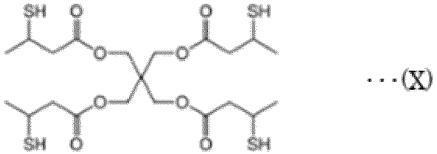

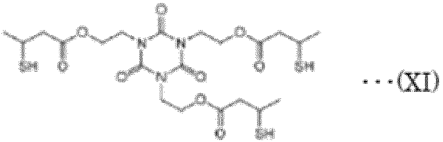

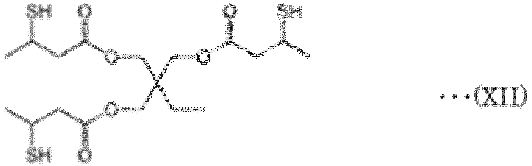

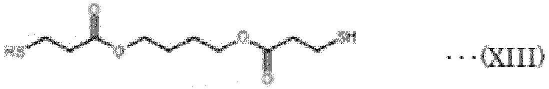

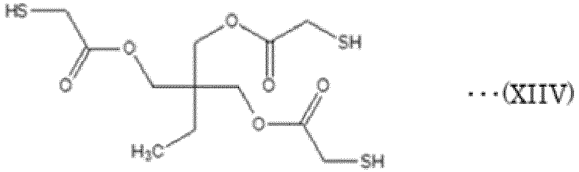

The adhesive composition may contain a monomer having a radically polymerizable carbon-carbon double bond as a crosslinking agent. The monomer having a radically polymerizable carbon-carbon double bond means a monomer that can be polymerized by generating a radical by applying an active energy ray or heat with the above-mentioned photoradical polymerization initiator.

Examples of the monomer having a radically polymerizable carbon-carbon double bond include a monosubstituted vinyl compound such as styrene, acrylate, acrylamide, acrylonitrile, vinyl acetate, and vinyl chloride; a 1,1-disubstituted vinyl compound such as α-methylstyrene, methacrylate, and methacrylamide; a cyclic olefin such as acenaphthylene and N-substituted maleimide; and a conjugated diene compound such as butadiene and isoprene. Among these, (meth) acrylate is preferable, and monofunctional (meth)acrylate, bifunctional (meth)acrylate, polyfunctional (meth) acrylate having three or more functional groups, and the like can be used. Hereinafter, acrylate, which is a monomer having a radical polymerizable carbon-carbon double bond, is sometimes referred to as an acrylic crosslinking agent.

Examples of the monofunctional (meth)acrylate include an alkyl mono (meth)acrylate such as methyl (meth)acrylate, ethyl (meth)acrylate, propyl (meth)acrylate, butyl (meth)acrylate, 2-ethylhexyl (meth)acrylate, isodecyl (meth)acrylate, isooctyl (meth)acrylate, lauryl (meth)acrylate, stearyl (meth)acrylate, and isostearyl (meth)acrylate; an alicyclic mono(meth)acrylate such as cyclohexyl (meth)acrylate, dicyclopentanyl (meth)acrylate, and isobornyl (meth)acrylate; a dicyclopentenyl-group-containing mono (meth)acrylate such as dicyclopentenyl (meth)acrylate and dicyclopentenyloxyethyl (meth)acrylate; an aryl mono(meth)acrylate such as phenyl acrylate and benzyl acrylate; a phenoxy-group-containing mono(meth)acrylate such as phenoxyhydroxypropyl (meth)acrylate, phenoxyethyl (meth)acrylate, phenoxyethylene glycol (meth)acrylate, and phenoxypolyethylene glycol (meth)acrylate; an alokoxyalkyl mono(meth)acrylate such as 2-butoxyethyl(meth)acrylate; a hydroxy-group-containing (meth)acrylate such as 2-hydroxyethyl (meth)acrylate, 2-hydroxypropyl (meth)acrylate, 2-hydroxybutyl (meth)acrylate, and butoxyhydroxypropyl (meth)acrylate; an amino-group-containing (meth)acrylate such as N,N-diethylaminoethyl (meth)acrylate and N,N-dimethylaminoethyl (meth)acrylate; an epoxy-group-containing (meth)acrylate such as glycidyl (meth)acrylate; an alkoxydialkyleneglycol mono(meth)acrylate such as methoxydiethylene glycol (meth)acrylate and methoxydipropylene glycol (meth)acrylate; a fluorine-group-containing (meth)acrylate such as tetrafluoropropyl (meth)acrylate and heptadecafluorodecyl (meth)acrylate; a nonylphenoxypolyethylene glycol (meth)acrylate, nonylphenoxypolypropylene glycol (meth)acrylate, and morpholine (meth)acrylate.

Examples of the bifunctional (meth) acrylate include an alkylene glycol di(meth) acrylate such as 1,4-butanediol di(meth)acrylate, neopentyl glycol diacrylate, 1,6-hexanediol di(meth)acrylate (also known as "1,6-bis (acryloyloxy) hexane"), and 1,9-nonanediol di(meth)acrylate; a polyalkylene glycol di(meth)acrylate such as diethylene glycol di(meth)acrylate, triethylene glycol di(meth)acrylate, and tripropylene glycol di(meth)acrylate; a di(meth)acrylate having an ester group-containing diol skeleton such as hydroxypivalic acid ester neopentyl glycol di(meth)acrylate; an alicyclic di(meth) acrylate such as dicyclopentanyl di(meth)acrylate, tricyclodecane dimethanol di(meth) acrylate, and ethoxylated hydrogenated bisphenol A di(meth) acrylate; and hydroxypropyl di(meth)acrylate, diethylene glycol bis(hydroxypropyl(meth) acrylate), and propoxylated bisphenol A bis(hydroxyfluoropyr(meth)acrylate).

Examples of the polyfunctional (meth) acrylate having three or more functional groups include a trimethylolpropane type polyvalent (meth)acrylate such as trimethylolpropane tri(meth)acrylate, ditrimethylolpropane tetra(meth)acrylate, and hydroxypropylated trimethylolpropane tri(meth)acrylate; a pentaerythritol type polyvalent (meth)acrylate such as pentaerythritol tetra(meth)acrylate, dipentaerythritol hexa(meth)acrylate, and monohydroxypentaerythritol tri(meth)acrylate; and an isocyanurate type polyvalent (meth)acrylate such as tris((meth)acryloxyethyl) isocyanurate.

The content of the crosslinking agent is not particularly limited, and is preferably 0.01 to 10 parts by mass, more preferably 0.05 to 7 parts by mass, and further more preferably 0.1 to 5 parts by mass, with respect to 100 parts by mass of the total of the block copolymer (X), the tackifier resin (Y), and the plasticizer (Z).

### (Photoradical Polymerization Initiator)

As the photoradical polymerization initiator, an intramolecular cleavage type photoradical polymerization initiator and/or a hydrogen withdrawing type photoradical polymerization initiator can be used.

Examples of the intramolecular cleavage type photoradical polymerization initiator include a benzoin derivative, benzyl ketal [for example, manufactured by FUJIFILM Wako Pure Chemical Corporation, trade name: IRGACURE 651 (2,2-dimethoxy-1,2-diphenylethane-1-one)], α-hydroxyacetophenone [for example, manufactured by FUJIFILM Wako Pure Chemical Corporation, trade name: DAROCUR 1173 (2-hydroxy-2-methyl-1-phenylpropane-1-one), IRGACURE 184 (1-hydroxycyclohexyl phenyl ketone), IRGACURE 127 (2-hydroxy-1-{4-[4-(2-hydroxy-2-methylpropionyl)-benzyl] phenyl }-2-methyl-1-one), IRGACURE 2959 (1-[4-(2-hydroxyethoxy)-phenyl]-2-hydroxy-2-methyl-1-propane-1-one)], α-aminoacetophenone [for example, manufactured by FUJIFILM Wako Pure Chemical Corporation, trade name: IRGACURE 907 (2-methyl-1-[4-(methylthio) phenyl]-2-morpholinopropane-1-one), IRGACURE 369 (2-benzyl-2-dimethylamino-1-(4-morpholinophenyl)-butanone-1)], a combination of α-aminoacetophenone and thioxanthone (for example, isopropylthioxanthone and diethylthioxanthone), and an acylphosphine oxide [for example, manufactured by FUJIFILM Wako Pure Chemical Corporation, trade name: IRGACURE 819 (bis(2,4,6-trimethylbenzoyl)-phenylphosphine oxide)].

Examples of the hydrogen withdrawing type photoradical polymerization initiator include a combination of a benzophenone and an amine, and a combination of thioxanthone and an amine. Further, the intramolecular cleavage type and the hydrogen withdrawing type can be used in combination. Among them, oligomerized α-hydroxyacetophenone and acrylated benzophenone are preferable. More specific examples thereof include oligo [2-hydroxy-2-methyl-1-[4-(1-methylvinyl) phenyl] propanone] [for example, manufactured by LambertiS. p. A, trade name: ESACUREKIP150], acrylated benzophenone [for example, manufactured by Daicel-UCB Company, trade name: EbecrylP136], and imide acrylate.

In addition to these, 1-[4-(2-hydroxyethoxy) phenyl]-2-methyl-1-propane-1-one, 1-hydroxy-cyclohexyl-phenyl-ketone, a mixture of 1-hydroxy-cyclohexyl-phenyl-ketone and benzophenone, 2,2-dimethoxy-1,2-diphenylethane-1-one, 2,4,6-trimethylbenzoylphenylphosphine oxide, 2,4,6-trimethylbenzoylphenylphenylethoxyphosphine oxide, 2-benzyl-2-dimethylamino-1-(4-morpholinophenyl) butanone-1,2-hydroxy-2-methyl-1-phenyl-propane-1-one, 2-methyl-1-[(4-methylthio) phenyl]-2-morpholinopropane-1-one, benzoylmethyl ether, benzoylethyl ether, benzoylbutyl ether, benzoylisopropyl ether, bis(2,4,6-trimethylbenzoyl) phenylphosphine oxide, 2-hydroxy-2-methyl-[4-(1-methylvinyl) phenyl] propanol oligomer, a mixture of 2-hydroxy-2-methyl-[4-(1-methylvinyl) phenyl] propanol oligomer and 2-hydroxy-2-methyl-1-phenyl-1-propanone, isopropylthioxanthone, methyl o-benzoylbenzoate, [4-(methylphenylthio) phenyl] phenylmethane, and the like can also be used.

The amount of the photoradical polymerization initiator contained in the adhesive composition is preferably 0.1 to 10 parts by mass, and more preferably 0.5 to 3 parts by mass, with respect to 100 parts by mass of the total of the block copolymer (X), the tackifier resin (Y), and the plasticizer (Z) contained in the adhesive composition. In addition, a known photosensitizer can be used together with the photoradical polymerization initiator.

### <Physical Property of Adhesive Composition>

### (Biobased Content)

The biobased content of the adhesive composition, which is measured according to ASTM D6866-21, is preferably 10 to 100% by mass, more preferably 10 to 90% by mass, further more preferably 13 to 85% by mass, still further more preferably 15 to 80% by mass, still further more preferably 17 to 78% by mass, still further more preferably 19 to 76% by mass, still further more preferably 25 to 74% by mass, still further more preferably 30 to 72% by mass, still further more preferably 35 to 70% by mass, and particularly preferably 38 to 70% by mass, from the viewpoint of reduction of a petroleum-derived raw material and ease of production.

The biobased content is measured by the method described in detail in Examples.

### (Haze)

According to the adhesive composition, the haze, which is an index correlated with the compatibility, can be reduced to, for example, 35% or less, 10% or less, or 5% or less.

The haze is measured in accordance with JIS K 7136:2000, and specifically measured by the method described in Examples.

### (180° Peel Strength)

The 180° peel strength of the adhesive composition, which is measured in accordance with JIS Z 0237:2009 under conditions of a temperature of 23°C and a peel rate of 200 mm/minute, is preferably 10.0 N/25 mm or more, more preferably 15.0 N/25 mm or more, and further more preferably 20.0 N/25 mm or more, from the viewpoint of ensuring high adhesive property.

In the case of an application requiring a relatively low adhesive property, it is preferably 2.0 to 9.5 N/25 mm, more preferably 3.0 to 9.0 N/25 mm, further more preferably 3.5 to 8.5 N/25 mm, and still further more preferably 4.0 to 8.5 N/25 mm, from the viewpoint of easily preventing the occurrence of adhesive residue while ensuring the minimum necessary adhesive property and the like.

The 180° peel strength is measured by a method described in detail in Examples.

### (SAFT)

From the viewpoint of ensuring sufficient heat resistance, the shear adhesion fail temperature (SAFT) of the adhesive composition, which is calculated from the falling time of a weight in accordance with ASTM D3654M: 2019 under the conditions of adhesive area of 25 mm × 25 mm, weight of 500 g, temperature range of 40 to 205°C, and heating rate of 0.5°C/min, is preferably 95°C or higher, more preferably 100°C or higher, and further more preferably 110°C or higher. When higher heat resistance is required, it is preferably 130°C or higher, more preferably 150°C or higher, further more preferably 180°C or higher, still further more preferably 200°C or higher, still further more preferably 205°C or higher, and particularly preferably higher than 205°C

The SAFT is measured by a method described in detail in Examples.

### (Melt Viscosity Measured at 180°C)

The melt viscosity of the adhesive composition measured at 180°C is preferably 16,000 mPa·s or less, more preferably 15,000 mPa·s or less, further more preferably 14,500 mPa·s or less, and still further more preferably 14,000 Pa·s or less, from the viewpoint of processability and ease of coating as a hot-melt adhesive composition. In addition, from the viewpoint of ease of handling as a hot-melt adhesive composition, it is preferably 1,000 mPa·s or more, more preferably 1,500 mPa·s or more, further more preferably 1,800 mPa·s or more, and still further more preferably 2,000 mPa·s or more. In other words, the melt viscosity of the adhesive composition measured at 180°C is preferably 1,000 to 16,000 mPa·s.

Note that the melt viscosity of the adhesive composition means a viscosity measured at 180°C using a Brookfield type viscometer (B-type viscometer).

### [Method for Producing Adhesive Composition]

A method for producing an adhesive composition according to an embodiment of the present invention includes:
(I) a step of dissolving the block copolymer (X) and the tackifier (Y) in a solvent and then distilling off the solvent; or
(II) a step of melt-kneading the block copolymer (X) and the tackifier (Y).

The production method of (I) (hereinafter, sometimes referred to as "production method (I)") preferably includes: a step of preparing a mixed liquid by mixing a solution (X') containing a block copolymer (X) and a first solvent and a solution (Y') containing a tackifier (Y) and a second solvent (step 1-1); and
a step of removing the first and second solvents contained in the mixed liquid to obtain a resin component (step 1-2).

Examples of the first solvent and the second solvent include cyclopentane, cyclohexane, cycloheptane, and cyclooctane. The first solvent and the second solvent may be the same or different.

In the production method (I), the use of a solvent reduces the restriction on the viscosity of the tackifier (Y) that can be used. Therefore, the degree of freedom in the design of the adhesive composition can be increased. In addition, it becomes easy to use a tackifier (Y) having a high viscosity, and it becomes easy to increase the physical property such as the adhesion retention property of the adhesive composition.

In the production method (I), the block copolymer (X) and the tackifier (Y) may be added to a common solvent at the same time, the tackifier (Y) may be added to the solvent after the block copolymer (X) is added to the solvent, or the block copolymer (X) may be added to the solvent after the tackifier (Y) is added to the solvent.

Alternatively, the block copolymer (X) and the tackifier (Y) may be melt-kneaded in advance to prepare a mixture, and the mixture can be dissolved in a solvent.

When the plasticizer (Z) is used, it is preferable to dissolve the block copolymer (X), the tackifier (Y), and the plasticizer (Z) in a solvent. As another method, a method in which any two components of the block copolymer (X), the tackifier (Y), and the plasticizer (Z) are mixed first, the mixture is dissolved in a solvent, and then the remaining one component is dissolved in the obtained solution, or a method in which the mixture is dissolved in a first solvent, the remaining one component is dissolved in the first solvent or a second solvent different from the first solvent, and the solutions are mixed, may also be adopted.

Further, the block copolymer (X) and the plasticizer (Z) may be melt-kneaded in advance to prepare a mixture, and the tackifier (Y) can be added thereto and dissolved in a solvent.

In addition, in any of the above methods, other additives may be added at an appropriate timing.

When each of the above components is dissolved in a solvent, there is no particular limitation on which component to be dissolved and the solvent is added to the other, and the component may be added to the solvent, or the solvent may be added to the component.

In the step 1-2, examples of the method for taking out the polymer from the mixed liquid include a method in which the resin component is coagulated (steam stripped), and a spray drying method in which the polymer solution is brought to a high temperature and a high pressure and sprayed under ordinary pressure to take out the resin component

The production method of (II) (hereinafter, also referred to as "production method (II)") includes a step of melt-kneading the block copolymer (X) and the tackifier (Y) (step 2-1).

The production method (II) is advantageous in that a solvent is not required, and many types of adhesive compositions can be easily produced in a small lot with the same production equipment.

In the step of melt-kneading (step 2-1), in the method for producing the adhesive composition, from the viewpoint of easily increasing the dispersibility of the tackifier (Y), it is preferable to melt the block copolymer (X), then add the tackifier (Y), and perform melt-kneading.

In the step 2-1, from the viewpoint of easily increasing the productivity, it is preferable to perform melt-kneading using a twin-screw extruder by adding the tackifier (Y) to the molten block copolymer (X) from the middle of the extrusion path of the twin-screw extruder.

When the plasticizer (Z) is used, the plasticizer (Z) may be mixed in advance with at least one selected from the group consisting of the block copolymer (X) and the tackifier (Y), and the other component or other additives may be added to the mixture.

In this case, a mixture containing the plasticizer (Z) such as the liquid rubber component (Za) at a relatively high concentration with respect to the block copolymer (X) is prepared, and the tackifier (Y) is added to this mixture and melt-kneaded, whereby an adhesive composition in which the plasticizer (Z) is diluted to a predetermined concentration can be prepared.

### [Use Method of Adhesive Composition]

The adhesive composition according to the present embodiment can be used in the following various methods.

### · Use Method (i): The adhesive composition is used as it is as an adhesive, and two adherends are adhered to each other provided with a layer of the adhesive composition (adhesive layer) therebetween.

In this case, after the adhesive composition is placed on at least one of the two adherends, both the adherends may be relatively pressure-pressed with the adhesive layer therebetween, or the two adherends may be placed with a minute space therebetween and the space can be filled with the adhesive composition. The adhesive layer may be directly formed on the adherend by coating, or the adhesive layer prepared by forming by coating on a temporary support can be transferred onto the adherend. Note that, when the adhesive layer is formed or the space is filled with the adhesive composition, it is preferable to dissolve the adhesive composition in a solvent in advance to increase the fluidity.

### · Use Method (ii): The viscosity is reduced by heating and then it is used.

In a case where the melt viscosity of the adhesive composition is high, or in a case where it is necessary to coat without using a solvent, it is preferable to use the adhesive composition after softening it to a predetermined viscosity by heating.

In this use method, the adhesive composition can be placed on at least one of the two adherends in a state of being softened by heating, or the adhesive composition can be placed on at least one of the two adherends and then softened by heating, and both adherends can be relatively pressure-pressed with the softened adhesive composition therebetween. Alternatively, two adherends may be placed with a minute space therebetween, and the heated and melted adhesive composition may be filled in the space.

### · Use Method (iii): By irradiating with UV light to perform crosslinking, heat resistance is increased, whereby it is used.

In this case, after the adhesive layer is formed by the procedure described in the use method (i) or (ii), it is preferable to perform crosslinking by UV light irradiation before the adherends are bonded to each other. In a case where at least one of the adherends has UV light transmittance, after one adherend is attached to the other adherend with the adhesive layer therebetween, or after the adhesive composition is filled between the two adherends, the adhesive composition can be crosslinked by UV light irradiation through the adherend having UV light transmittance.

Note that, in the present use method, it is preferable to perform UV light irradiation within a range in which the adhesive property of the adhesive layer is not excessively reduced.

### · Use Method (iv): After the adherend is adhered, the adherend is peeled off by irradiation with UV light, when necessary.

By irradiating the adhesive layer with UV light in a state where two adherends are adhered to each other by the adhesive layer formed by the procedure of any one of the use methods (I) to (iii), crosslinking is allowed to proceed to reduce the adhesive property of the adhesive layer. Therefore, the adhesive layer can be easily peeled off from the adherend.

When the adhesive composition contains a crosslinking agent, from the viewpoint of avoiding inhibition of surface curing due to oxygen inhibition, for example, it is preferable that the adhesive composition is covered with an oxygen blocking film such as a polypropylene film, a polyethylene terephthalate film, or a Teflon (registered trademark) film so that the surface is not in contact with oxygen, and then irradiation with UV light is performed through the oxygen blocking film, or irradiation with UV light is performed in an atmosphere in which oxygen is replaced with an inert gas such as nitrogen or carbon dioxide.

### Examples

Hereinafter, the present invention is even further described in detail with reference to Examples, but the present invention is not limited to these Examples. Note that, β-farnesene (purity of 97.6% by mass, manufactured by Amyris, Inc.) was purified with a molecular sieve of 3 Å and distilled under a nitrogen gas atmosphere to remove hydrocarbon-based impurity such as zingiberene, bisabolene, farnesene epoxide, a farnesol isomer, E,E-farnesol, squalene, ergosterol and several kinds of dimers of farnesene, and then used for the following polymerization.

Materials used in the following Examples and Comparative Examples are as follows.

### <Block Copolymer>

· Unhydrogenated block copolymer (X-1) of Production Example 1 mentioned later
· Hydrogenated block copolymer (X-2) of Production Example 2 mentioned later
· Hydrogenated block copolymer (X-3) of Production Example 3 mentioned later
· Unhydrogenated block copolymer (X-4) of Production Example 4 mentioned later
· Unhydrogenated block copolymer (X-5) of Production Example 5 mentioned later
· Styrene-isoprene-styrene block copolymer

### Product name: Quintac 3421, manufactured by Zeon Corporation

### <Tackifier (Y)>

· Product name: ARKON P90, hydrogenated petroleum resin manufactured by Arakawa Chemical Industries, Ltd., softening point: 90±5°C
· Product name: ARKON P125, hydrogenated petroleum resin manufactured by Arakawa Chemical Industries, Ltd., softening point: 125±5°C
· Product name: ARKON M135, partially hydrogenated petroleum resin manufactured by Arakawa Chemical Industries, Ltd., softening point: 135:J::5°C
· Product name: YS RESINS TO105, aromatic modified terpene resin manufactured by Yasuhara Chemical Co., Ltd., softening point: 105±5°C
· Product name: T-REZ HA085, hydrogenated petroleum resin (DCPD) manufactured by ENEOS Corporation, softening point:85°C±5°C
· Product name: T-REZ RB100, aliphatic-based hydrocarbon resin (C5) manufactured by ENEOS Corporation, softening point: 100°C±5°C
· Product name: YS POLYSTER TH130, terpene-phenol resin manufactured by Yasuhara Chemical Co., Ltd., softening point: 130±5°C
· Product name: CLEARON P150, hydrogenated terpene resin manufactured by Yasuhara Chemical Co., Ltd., softening point: 152°C±5°C
· Product name: CLEARON M115, aromatic modified hydrogenated terpene resin manufactured by Yasuhara Chemical Co., Ltd., softening point: 115°C ± 5°C

### <Liquid Rubber Component (Za)>

· Unhydrogenated liquid rubber (Z-1) of Production Example 6 mentioned later
· Unhydrogenated liquid rubber (Z-2) of Production Example 7 mentioned later

### <Biomass-Derived Plasticizer (Zb)>

· Product name: VIVA-B-FIX 10227, natural product-derived oil manufactured by H&R Group

### <Synthetic Plasticizer (Zc)>

· Product name: PW-90, paraffin-based process oil manufactured by Idemitsu Kosan Co., Ltd., kinematic viscosity (40°C): 90 mm²/s

### <Antioxidant>

· Product name: ADK STAB AO-60, manufactured by ADEKA Corporation. melting point: 110 to 130°C, molecular weight: 1,178

### <Photoradical Polymerization Initiator>

· Product name: IRGACURE 651, 2,2-dimethoxy-2-phenylacetophenone manufactured by FUJIFILM Wako Pure Chemical Corporation

### <Crosslinking Agent>

· Tris(mercaptoacetic acid) trimethylolpropane, manufactured by FUJIFILM Wako Pure Chemical Corporation
· 1,6-bis (acryloyloxy) hexane, manufactured by Tokyo Chemical Industry Co., Ltd.

### [Measurement Method]

The details of the methods for measuring the respective physical properties of the polymers obtained in the following respective production examples are as follows.

### (1) Measurement of Weight Average Molecular Weight and Molecular Weight Distribution

The following respective items were measured by GPC (gel permeation chromatography). Specifically, the weight average molecular weight (Mw) and the molecular weight distribution (Mw/Mn) of each component were determined by GPC in terms of standard polystyrene equivalent molecular weight.
· Weight average molecular weight of polymer block (A)
· Weight average molecular weight of polymer block (B)
· Weight average molecular weight of unhydrogenated block polymer
· Molecular weight distribution of unhydrogenated block polymer
· Weight average molecular weight of hydrogenated block polymer
· Molecular weight distribution of hydrogenated block polymer
· Weight average molecular weight of unhydrogenated liquid rubber
· Molecular weight distribution of unhydrogenated liquid rubber

The measuring apparatus and conditions are as follows.
· Apparatus: GPC apparatus "HLC-8320GPC" manufactured by Tosoh Corporation
· Separation column: Column "TSKgelSuperHZ4000" manufactured by Tosoh Corporation
· Eluent: tetrahydrofuran
· Eluent flow rate: 0.7 mL/min
· Sample concentration: 5 mg/10 mL
· Column temperature: 40°C

Note that the weight average molecular weight of each polymer block contained in the block copolymer was determined by measuring a sampled liquid every time the polymerization of each polymer block was completed in the production process.

### (2) Method for Measuring Degree of Hydrogenation

Each of the unhydrogenated block copolymer and hydrogenated block copolymer was dissolved in deuterated chloroform solvent (CDCl₃), and ¹H-NMR was measured at 50°C using "Lambda 500" manufactured by JEOL Ltd.

The degree of hydrogenation of the hydrogenated block copolymer was calculated by the following formula from the peak derived from styrene appearing at 6.5 to 7.5 ppm and the peak of the proton contained in the carbon-carbon double bond (peak derived from carbon-carbon double bond) appearing at 4.5 to 6.0 ppm in the obtained spectrum. Degree of hydrogenation (mol%) = {1 - (ratio of peak area derived from carbon-carbon double bond to peak area derived from styrene of hydrogenated block copolymer)/(ratio of peak area derived from carbon-carbon double bond to peak area derived from styrene of unhydrogenated block copolymer)} × 100

### (3) Vinyl Bonding Amount

The block copolymer before hydrogenation was dissolved in deuterated chloroform solvent (CDCl₃), and subjected to ¹H-NMR measurement [apparatus: "ADVANCE 400 Nano bay" (manufactured by Bruker), measuring temperature: 30°C]. The vinyl bonding amount in the polymer block (B) was calculated from the ratio of the peak area corresponding to the 3,13-bonding unit and 1,2-bonding unit in β-farnesene to the total peak area of the structural unit derived from β-farnesene. In addition, for the liquid rubber component (Z-1) mentioned later, the vinyl bonding amount was calculated in the same manner as the above procedure, and for the liquid rubber component (Z-2), the vinyl bonding amount was calculated from the ratio of the peak area corresponding to the 1,2-bonding unit of butadiene to the total peak area of the structural unit derived from butadiene in the same manner as the above procedure.

### (4) 38°C Melt Viscosity of Liquid Rubber Component (Za)

The melt viscosity of the liquid rubber component (Za) at 38°C was measured by a Brookfield type viscometer (manufactured by BROOKFIELD ENGINEERING LABS. INC.).

### (5) Glass Transition Temperature (Tg)

A disk-shaped test piece having a diameter of 8 mm and a thickness of 1 mm was cut out from the adhesive layer (Y) produced by a compression press molding machine. The dynamic viscoelasticity of the test piece was measured using an ARES-G2 rheometer (manufactured by TA Instruments) under the following conditions, and the loss tangent (tan δ) was measured under the conditions of -100°C to +50°C, a frequency of 1 Hz, and a strain of 0.1%, and the peak top temperature at that time was taken as Tg.

### (Dynamic Viscoelasticity Measurement Apparatus and Measurement Conditions)

· Parallel plate: diameter of 8 mm
· Vibration mode: torsional vibration
· Strain amount: 0.1%
· Frequency: 1 Hz
· Measurement temperature: -100 to +50°C
· Rate of temperature increase: 3°C/minute

### [Production Example 1] Production of Unhydrogenated Block Copolymer (X-1)

A nitrogen-purged and dried pressure-resistant container was charged with 62.4 kg of cyclohexane as a solvent and 0.0535 kg of sec-butyllithium (10.5% by mass cyclohexane solution) as an anionic polymerization initiator, the temperature was raised to 50°C, then 1.40 kg of styrene (1) was added and polymerization was performed for 1 hour, subsequently 12.79 kg of β-farnesene was added and polymerization was performed for 2 hours, and further 1.40 kg of styrene (2) was added and polymerization was performed for 1 hour, to obtain a polystyrene-poly(β-farnesene)-polystyrene triblock copolymer (hereinafter also referred to as "unhydrogenated block copolymer (X-1)").

### [Production Example 2] Production of Hydrogenated Block Copolymer (X-2)

A nitrogen-purged and dried pressure-resistant container was charged with 62.4 kg of cyclohexane as a solvent and 0.0535 kg of sec-butyllithium (10.5% by mass cyclohexane solution) as an anionic polymerization initiator, the temperature was raised to 50°C, then 1.40 kg of styrene (1) was added and polymerization was performed for 1 hour, subsequently 12.79 kg of β-farnesene was added and polymerization was performed for 2 hours, and further 1.40 kg of styrene (2) was added and polymerization was performed for 1 hour, to obtain a reaction liquid containing a polystyrene-poly(β-farnesene)-polystyrene triblock copolymer.

To the reaction liquid, palladium carbon (amount of palladium supported: 5% by mass) was added as a hydrogenation catalyst in an amount of 2.5% by mass with respect to the triblock copolymer, and it was allowed to react under conditions of a hydrogen pressure of 2 MPa at 150°C for 10 hours. After allowing to cool and releasing the pressure, the palladium carbon was removed by filtration, and the filtrate was concentrated and further vacuum-dried to obtain a hydrogenated product of a polystyrene-poly (β-farnesene)-polystyrene triblock copolymer (hereinafter, also referred to as "hydrogenated block copolymer (X-2)").

### [Production Example 3] Production of Hydrogenated Block Copolymer (X-3)

A hydrogenated product of a polystyrene-poly(β-farnesene)-polystyrene triblock copolymer (hereinafter, also referred to as a "hydrogenated block copolymer (X-3)") was obtained by the same procedure as in Production Example 2 except that palladium carbon (amount of palladium supported: 5% by mass) as a hydrogenation catalyst was used in an amount of 5% by mass with respect to the triblock copolymer in the hydrogenation.

### [Production Example 4] Production of Unhydrogenated Block Copolymer (X-4)

A nitrogen-purged and dried pressure-resistant container was charged with 62.4 kg of cyclohexane as a solvent and 0.0535 kg of sec-butyllithium (10.5% by mass cyclohexane solution) as an anionic polymerization initiator, the temperature was raised to 50°C, then 1.40 kg of styrene (1) was added and polymerization was performed for 1 hour, and subsequently 6.40 kg of β-farnesene was added and polymerization was performed for 2 hours to obtain a polystyrene-poly(β-farnesene) diblock copolymer (hereinafter also referred to as "unhydrogenated block copolymer (X-4)").

### [Production Example 5] Production of Unhydrogenated Block Copolymer (X-5)

A nitrogen-purged and dried pressure-resistant container was charged with 62.4 kg of cyclohexane as a solvent and 0.0460 kg of sec-butyllithium (10.5% by mass cyclohexane solution) as an anionic polymerization initiator, the temperature was raised to 50°C, then 2.34 kg of styrene (1) was added and polymerization was performed for 1 hour, subsequently 10.92 kg of β-farnesene was added and polymerization was performed for 2 hours, and further 2.34 kg of styrene (2) was added and polymerization was performed for 1 hour, to obtain a polystyrene-poly(β-farnesene)-polystyrene triblock copolymer (hereinafter also referred to as "unhydrogenated block copolymer (X-5)").

For each of the block copolymers obtained in Production Examples 1 to 5, various physical properties were measured according to the above-mentioned measurement procedures. The measurement results are shown in Table 1 together with the compositions.

**Table 1**

| | | | Production Example 1 | Production Example 2 | Production Example 3 | Production Example 4 | Production Example 5 |
|---|---|---|---|---|---|---|---|
| Block Copolymer | | | (X-1) | (X-2) | (X-3) | (X-4) | (X-5) |
| Used Amount [kg] | Solvent | Cyclohexane | 62.4 | 62.4 | 62.4 | 62.4 | 62.4 |
| | Polymerization Initiator | sec-butyllithium (10.5% by Mass Cyclohexane Solution) | 0.0535 | 0.0535 | 0.0535 | 0.0535 | 0.0460 |
| | Polymer Block (A) | Styrene (1) | 1.40 | 1.40 | 1.40 | 1.40 | 2.34 |
| | | Styrene (2) | 1.40 | 1.40 | 1.40 | - | 2.34 |
| | Polymer Block (B) | β-farnesene | 12.79 | 12.79 | 12.79 | 6.40 | 10.92 |
| Amount of Farnesene in Polymer Block (B) [% by Mass] *1 | | | 100 | 100 | 100 | 100 | 100 |
| Mass Ratio:(A)/((A)+(B)) *2 | | | 18/100 | 18/100 | 18/100 | 18/100 | 30/100 |
| Polymer Skeleton *3 | | | St-F-St | St-F-St | St-F-St | St-F | St-F-St |
| Physical Property | Weight Average Molecular Weight Mw of Polymer Block (A) | | 14,400 | 14,400 | 14,400 | 14,400 | 28,800 |
| | Weight Average Molecular Weight Mw of Polymer Block (B) | | 161,000 | 161,000 | 161,000 | 80,500 | 204,000 |
| | Weight Average Molecular Weight Mw of Block Copolymer | | 189,800 | 203,900 | 203,900 | 94,900 | 261,600 |
| | Molecular Weight Distribution Mw/Mn of Block Copolymer | | 1.17 | 1.23 | 1.23 | 1.15 | 1.17 |
| | Vinyl Bonding Amount of Polymer Block (B) [mol%] | | 6.0 | 6.0 | 6.0 | 6.0 | 6.0 |
| | Degree of Hydrogenation of Block Copolymer [mol%] *4 | | 0 | 46.4 | 92.8 | 0 | 0 |
| | Tg of Block Copolymer [°C] | | -64 | -57 | -51 | -64 | -64 |

Note that the details of notes *1 to *4 in Table 1 are as follows.
*1: It represents the content [% by mass] of the structural unit derived from β-farnesene in the polymer block (B).
*2: It represents a mass ratio of the content of the polymer block (A) to the total of respective contents of the polymer block (A) and the polymer block (B).
*3: "St-F-St" represents a polystyrene-poly (β-farnesene)-polystyrene triblock copolymer. "St-F" represents a polystyrene-poly(β-farnesene) diblock copolymer.
*4: It represents a degree of hydrogenation of a carbon-carbon double bond with respect to a conjugated diene compound unit in an unhydrogenated block copolymer which is a block copolymer before hydrogenation, and specifically represents a value measured by a method described in Examples.

As shown in Table 1, each of the unhydrogenated block copolymer (X-1) of Production Example 1, the hydrogenated block copolymer (X-2) of Production Example 2, the hydrogenated block copolymer (X-3) of Production Example 3, the unhydrogenated block copolymer (X-4) of Production Example 4, and the unhydrogenated block copolymer (X-5) of Production Example 5 has a structural unit derived from β-farnesene. Note that, since the polymer block (B) is composed only of a structural unit derived from β-farnesene in any way, the vinyl bonding amount in the polymer block (B-1) is also the vinyl bonding amount in the polymer block (B).

Each of the unhydrogenated block copolymer (X-1), the hydrogenated block copolymer (X-2), the hydrogenated block copolymer (X-3), and the unhydrogenated block copolymer (X-5) has a polystyrene-poly(β-farnesene)-polystyrene triblock skeleton. The unhydrogenated block copolymer (X-4) has a polystyrene-poly(β-farnesene) diblock skeleton and has a weight average molecular weight smaller than those of the (X-1), (X-2), (X-3), and (X-5).

The unhydrogenated block copolymer (X-1), the unhydrogenated block copolymer (X-4), and the unhydrogenated block copolymer (X-5) are not hydrogenated, and the hydrogenated block copolymer (X-2) has a degree of hydrogenation of less than 50 mol%. On the other hand, the hydrogenated block copolymer (X-3) has a degree of hydrogenation of 50 mol% or more.

### [Production Example 6] Production of Unhydrogenated Liquid Rubber (Z-1)

A nitrogen-purged and dried pressure-resistant container was charged with 20.2 kg of cyclohexane as a solvent and 3.70 kg of s-butyllithium as a polymerization initiator, the temperature was raised to 50°C, then 40.2 kg of β-farnesene was added, and polymerization was performed for 2 hours to obtain a poly β-farnesene rubber (hereinafter also referred to as "unhydrogenated liquid rubber (Z-1)").

### [Production Example 7] Production of Unhydrogenated Liquid Rubber (Z-2)

A nitrogen-purged and dried pressure-resistant container was charged with 23.0 kg of hexane as a solvent and 3.08 kg of n-butyllithium as a polymerization initiator, the temperature was raised to 50°C, then 0.2 kg of N,N,N',N'-tetramethylethylenediamine and 25.0 kg of butadiene were added, and polymerization was performed for 2 hours to obtain a polybutadiene rubber (hereinafter also referred to as "unhydrogenated liquid rubber (Z-2)").

Various physical properties of the unhydrogenated liquid rubbers obtained in Production Examples 6 and 7 were measured in accordance with the measurement procedures mentioned above. The measurement results are shown in Table 2 together with the compositions. Note that, in note *5 in Table 2, "Far" represents poly β-farnesene, and "Bd" represents polybutadiene.

**Table 2**

| | | Production Example 6 | Production Example 7 |
|---|---|---|---|
| Liquid Rubber Component | | (Z-1) | (Z-2) |
| Used Amount [kg] | Hexane | - | 23.0 |
| | Cyclohexane | 20.2 | - |
| | n-butyllithium | - | 3.08 |
| | s-butyllithium | 3.70 | - |
| | Butadiene | - | 25.0 |
| | β-farnesene | 40.2 | - |
| | N,N,N',N'-tetramethylethylenediamine | - | 0.20 |

| Polymer Skeleton *5 | | Far | Bd |
|---|---|---|---|
| Physical Property | Weight Average Molecular Weight Mw of Unhydrogenated Liquid Rubber | 9,000 | 6,000 |
| | Molecular Weight Distribution Mw/Mn of Unhydrogenated Liquid Rubber | 1.11 | 1.03 |
| | 38°C Melt Viscosity of Unhydrogenated Liquid Rubber [Pa·s] | 0.4 | 5.5 |
| | Vinyl Bonding Amount of Unhydrogenated Liquid Rubber [mol%] | 7.0 | 65.0 |

As is clear from Table 2, it can be seen that the unhydrogenated liquid rubber (Z-1) of Production Example 6 has a polyfarnesene structure and a high biobased content. In addition, it can be seen that since the vinyl bonding amount is small and the 38°C melt viscosity is also small, it is easy to uniformly disperse in the adhesive composition of the present invention, and it is easy to increase the coatability.

On the other hand, it can be seen that the unhydrogenated liquid rubber (Z-2) of Production Example 7 has a polybutadiene structure and does not contain a natural product-derived component, and thus it is difficult to increase the biobased content of the adhesive composition. On the other hand, since the vinyl bonding amount is higher than that of the unhydrogenated liquid rubber (Z-1), the crosslinkability by irradiation with energy rays such as ultraviolet rays can be easily increased. Therefore, it can be seen that the balance between the adhesive property and the heat resistance of the adhesive composition can be improved.

Next, examples of the adhesive composition are described.

### [Evaluation Method]

The details of the methods for measuring the respective physical properties and the methods for evaluating the respective evaluation items of the adhesive compositions obtained in the following respective Examples and Comparative Examples are as follows.

### (6) Biobased Content

The biobased content of each of the components used to prepare the adhesive composition and each of the adhesive compositions was measured in accordance with ASTM D6866-21. Specifically, each of the above components was combusted, and the quantity of CO₂ generated by the combustion was determined. For the quantified CO₂, the concentration of the ¹⁴C was measured using an accelerator mass spectrometer (AMS). Then, the concentration of ¹⁴C in the CO₂ in the atmosphere was compared with the measured concentration of ¹⁴C to calculate the biobased content.

The biobased content of each adhesive composition was calculated by the following formula based on the mass ratio of the block copolymer (X), the tackifier (Y), and the plasticizer (Z) used in the above Examples and Comparative Examples and the biobased content of each component. Biobased content (% by mass) of adhesive composition = (X1 × X2/100) + (Y1 × Y2/100) + (Z1 × Z2/100)

In the above formula, X1 represents the mass ratio (% by mass) of the block copolymer (X) to the total mass of the adhesive composition, Y1 represents the mass ratio (% by mass) of the tackifier (Y) to the total mass of the adhesive composition, and Z1 represents the mass ratio (% by mass) of the plasticizer (Z) to the total mass of the adhesive composition. X2 (% by mass) represents the biobased content of the block copolymer (X), Y2 (% by mass) represents the biobased content of the tackifier (Y), and Z2 (% by mass) represents the biobased content of the plasticizer (Z).

### (7) Thickness of Coating Film

The thickness of the coating film of the adhesive composition produced in each of Examples and Comparative Examples was measured using a digital thickness gauge (product name: SMD 565J-L, manufactured by TECLOOK).

### (8) Peeling Test

The PET film on which the coating film of the adhesive composition was formed prepared in each of Examples and Comparative Examples was cut into a width of 25 mm, and it was attached onto a smooth stainless steel plate (product name: SUS304, thickness: 1 mm, manufactured by ACC) such that the coating film was in contact with the stainless steel plate, roll-compressed at a rate of 10 mm/minute using a 2 kg rubber roller, and then allowed to stand for 24 hours in an atmosphere of 23±1°C and a humidity of 50±5%. Thereafter, a 180° peel test was performed in accordance with JIS Z 0237:2009 under the conditions of a temperature of 23°C and a peel rate of 200 mm/minute to measure the 180° peel strength.

### (9) Ball Tack

For the PET film on which the coating film of the adhesive composition was formed prepared in each of Examples and Comparative Examples, the characteristic value of the ball tack was measured in accordance with JIS Z0237:2009.

### (10) Shear Adhesion Failure Temperature (SAFT)

For the PET film on which the coating film of the adhesive composition was formed prepared in each of Examples and Comparative Examples, the falling time of the weight was measured in accordance with ASTM D3654M: 2019 under conditions of an adhesive area of 25 mm × 25 mm, a weight of 500 g, a temperature range of 40 to 205°C, and a rate of temperature increase of 0.5°C/min, and was defined as SAFT.

### (11) Haze

For the PET film on which the coating film of the adhesive composition was formed prepared in each of Examples and Comparative Examples, the haze was measured in accordance with JIS K 7136:2000.

### (12) Melt Viscosity at 180°C

The melt viscosity at 180°C of the adhesive composition prepared in each of Examples and Comparative Examples was measured with a Brookfield type viscometer (manufactured by BROOKFIELD ENGINEERING LABS., INC.).

### [Examples A1 to A9 and Comparative Examples CA1 to CA5]

Each component in an amount shown in Table 3 was dissolved in cyclohexane to prepare a solution.

Next, cyclohexane was further added to the solution to adjust the solid content concentration (TS) to 25% by mass, thereby preparing an adhesive composition for coating diluted so as to have a ratio of 20 parts by mass with respect to 60 parts by mass of cyclohexane. Note that, in the present specification, the TS of the adhesive composition diluted with a solvent means the concentration of the solid content (the total of the block copolymer, the tackifier, and the plasticizer) in the adhesive composition diluted with the solvent.

This adhesive composition for coating was applied onto a polyethyleneterephthalate (PET) film at a rate of 50 mm/sec using an automatic coater (PI-1020 AUTO FILM APPLICATOR, manufactured by Tester Sangyo Co., Ltd.), and then dried by heating at 60°C for 30 minutes to form a coating film of the adhesive composition having a thickness of 20 µm.

For the coating film of the adhesive composition of each of Examples A1 to A9 and Comparative Examples CA1 to CA5 thus prepared, various physical properties were measured according to the above-mentioned measuring procedures. The measurement results are shown in Table 3 together with the compositions.

**Table 3**

| Table 3-1 | | | | | | | | | | |
|---|---|---|---|---|---|---|---|---|---|---|
| Component Name/Evaluation Item | | Biobased Content [% by mass] | Unit | Example A1 | Example A2 | Example A3 | Example A4 | Example A5 | Example A6 | Example A7 |
| Block Copolymer | Unhydrogenated Block Copolymer (X-1) | 80 | | 40 | 40 | 40 | 40 | - | 40 | 40 |
| | Hydrogenated Block Copolymer (X-2) | 80 | | - | - | - | - | 40 | - | - |
| | Hydrogenated Block Copolymer (X-3) | 80 | | - | - | - | - | - | - | - |
| | Unhydrogenated Block Copolymer (X-5) | 70 | Part(s) by Mass | - | - | - | - | - | - | - |
| | Quintac 3421 | 0 | | - | - | - | - | - | - | - |
| Liquid Rubber Component | Unhydrogenated Liquid Rubber (Z-1) | 100 | | - | - | 20 | - | - | 10 | 10 |
| | Unhydrogenated Liquid Rubber (Z-2) | 0 | | - | - | - | 20 | - | - | - |
| Oil | PW-90 | 0 | | 20 | - | - | - | 20 | 10 | - |
| | VIVA-B-FIX 10227 | 100 | | - | 20 | - | - | - | - | 10 |
| Tackifier | ARKON P90 | 0 | | 40 | 40 | 40 | 40 | 40 | 40 | 40 |
| | YS RESIN TO105 | 70 | | - | - | - | - | - | - | - |
| Antioxidant | ADK STAB AO-60 | - | | 0.2 | 0.2 | 0.2 | 0.2 | 0.2 | 0.2 | 0.2 |
| Biobased Content of Adhesive Composition | | - | % by Mass | 32 | 52 | 52 | 32 | 32 | 42 | 52 |
| Thickness of Coating Film | | - | µm | 20 | 20 | 20 | 20 | 20 | 20 | 20 |
| Peeling Test | 180° peel strength (vs SUS) | - | N/25 mm | 19 | 15 | 11 | 11 | 18 | 29 | 23 |
| Ball Tack | | - | - | 8 | 10 | 12 | 8 | 8 | 8 | 8 |
| SAFT | | - | °C | 108 | 112 | 111 | 114 | 112 | 112 | 116 |

**Table 3-2**

| Component Name/Evaluation Item | | Biobased Content [% by mass] | Unit | Example A8 | Example A9 | Comparative Example CA1 | Comparative Example CA2 | Comparative Example CA3 | Comparative Example CA4 | Comparative Example CA5 |
|---|---|---|---|---|---|---|---|---|---|---|
| Block Copolymer | Unhydrogenated Block Copolymer (X-1) | 80 | | 40 | - | - | - | - | - | - |
| | Hydrogenated Block Copolymer (X-2) | 80 | | - | - | - | - | - | - | - |
| | Hydrogenated Block Copolymer (X-3) | 80 | | - | - | 40 | 40 | - | 40 | - |
| | Unhydrogenated Block Copolymer (X-5) | 70 | | - | 40 | - | - | - | - | - |
| | Quintac 3421 | 0 | | - | - | - | - | 40 | - | 40 |
| Liquid Rubber Component | Unhydrogenated Liquid Rubber (Z-1) | 100 | Part(s) by Mass | - | - | - | 20 | 20 | - | - |
| | Unhydrogenated Liquid Rubber (Z-2) | 0 | | - | - | - | - | - | - | - |
| Oil | PW-90 | 0 | | 20 | 20 | 20 | - | - | 20 | 20 |
| | VIVA-B-FIX 10227 | 100 | | - | - | - | - | - | - | - |
| Tackifier | ARKON P90 | 0 | | - | 40 | 40 | 40 | 40 | - | 40 |
| | YS RESIN TO105 | 70 | | 40 | - | - | - | - | 40 | - |
| Antioxidant | ADK STAB AO-60 | - | | 0.2 | 0.2 | 0.2 | 0.2 | 0.2 | 0.2 | 0.2 |
| Biobased Content of Adhesive Composition | | - | % by Mass | 60 | 28 | 32 | 52 | 20 | 60 | 0 |
| Thickness of Coating Film | | - | µm | 20 | 20 | 20 | 20 | 20 | 20 | 20 |
| Peeling Test | 180° peel strength (vs SUS) | - | N/25 mm | 18 | 14 | 9.7 | 8 | 6.6 | 6 | 9.7 |
| Ball Tack | | - | - | 8 | 8 | 8 | 8 | 12 | 4 | 14 |
| SAFT | | - | °C | 105 | 114 | 118 | 89 | 105 | 110 | 104 |

As shown in Table 3, it can be seen that the adhesive compositions of Examples A1 to A9 have a high biobased content, a high 180° peel strength, and a good adhesive property. In addition, the value of SAFT is 100°C or more, and it can be understood that high heat resistance is exhibited.

In contrast, the adhesive compositions of Comparative Examples CA1 to CA5, which do not contain any of the "unhydrogenated block copolymer" and the "hydrogenated block copolymer having a degree of hydrogenation of less than 50 mol%", all have a 180° peel strength lower than the value of the above Examples, and it can be seen that the adhesive property is inferior to those of the adhesive compositions of the above Examples.

In addition, it can be seen that the adhesive compositions of Comparative Examples CA2 and CA3 have smaller values of SAFT and 180° peel strength and are inferior in heat resistance and adhesive property, compared to the adhesive composition of Example A3 having the same composition except that "hydrogenated block copolymer having a degree of hydrogenation of 50 mol% or more" or "unhydrogenated block copolymer that does not contain a structural unit derived from farnesene" were used as the block copolymer.

In addition, it can be seen that the adhesive composition of Comparative Example CA5 has a smaller values of SAFT and 180° peel strength and is inferior in heat resistance and adhesive property compared to the adhesive composition of Examples A1 having the same composition except that "unhydrogenated block copolymer that does not contain a structural unit derived from farnesene" was used as the block copolymer.

Furthermore, it can be seen that the adhesive composition of Comparative Example CA1 has a smaller value of the 180° peel strength and is inferior in adhesive property compared to the adhesive compositions of Examples A1 and A5 having the same compositions except that "hydrogenated block copolymer having a degree of hydrogenation of 50 mol% or more" was used as the block copolymer.

Furthermore, it can be seen that the adhesive composition of Comparative Example CA4 has a smaller value of 180° peel strength and is inferior in adhesive property compared to the adhesive composition of Example A8 having the same composition except that "hydrogenated block copolymer having a degree of hydrogenation of 50 mol% or more" was used as the block copolymer.

### [Examples B1 to B9, Comparative Examples CB1 to CB2]

Each component in an amount shown in Table 4 was dissolved in cyclohexane to prepare a solution.

Next, cyclohexane was further added to the solution to adjust the solid content concentration (TS) to 25% by mass, thereby preparing an adhesive composition for coating diluted so as to have a ratio of 20 parts by mass with respect to 60 parts by mass of cyclohexane.

This adhesive composition for coating was applied onto a polyethyleneterephthalate (PET) film at a rate of 50 mm/sec using an automatic coater (PI-1020 AUTO FILM APPLICATOR, manufactured by Tester Sangyo Co., Ltd.), and then dried by heating at 60°C for 30 minutes to form a coating film of the adhesive composition having a thickness of 20 µm.

Next, the coating film was irradiated with UV light (wavelength: 365 nm) at an irradiation amount of 300 mJ/cm², 500 mJ/cm², or 1,000 mJ/cm² in an oxygen atmosphere, using a F300S & LC-6B UV conveyor system (manufactured by Heraeus Group) to crosslink the adhesive composition.

For the crosslinked coating film of the adhesive composition of each of Examples B1 to B9 and Comparative Examples CB1 to CB2 thus prepared, various physical properties were measured according to the above-mentioned measuring procedures. The measurement results are shown in Table 4 together with the compositions.

**Table 4**

| Table 4-1 | | | | | | | | | | |
|---|---|---|---|---|---|---|---|---|---|---|
| Component Name/Evaluation Item | | Biobased Content [% by mass] | Unit | Ex ample B1 | | | Example B2 | Example B3 | Example B4 | Example B5 |
| Block Copolymer | Unhydrogenated Block Copolymer (X-1) | 80 | | | 40 | | 40 | 40 | 40 | 24 |
| | Hydrogenated Block Copolymer (X-3) | 80 | | | - | | - | - | - | - |
| | Unhydrogenated Block Copolymer (X-4) | 80 | | | - | | - | - | - | - |
| | Quintac 3421 | 0 | | | - | | - | - | - | 16 |
| Liquid Rubber Component | Unhydrogenated Liquid Rubber (Z-1) | 100 | Part(s) by Mass | | - | | 20 | - | 10 | - |
| | Unhydrogenated Liquid Rubber (Z-2) | 0 | | | - | | - | 20 | - | - |
| Oil | PW-90 | 0 | | | 20 | | - | - | 10 | 20 |
| Tackifier | ARKON P90 | 0 | | | 40 | | 40 | 40 | 40 | 40 |
| Antioxidant | ADK STAB AO-60 | - | | | 2 | | 2 | 2 | 2 | 2 |
| Photoradical Polymerization Initiator | IRGACURE 651 | - | | | 2 | | 2 | 2 | 2 | 2 |
| Crosslinking Agent | Tris(mercaptoacetic acid) trimethylolpropane | - | | | 1 | | 1 | 1 | 1 | 1 |
| Biobased Content of Adhesive Composition | | - | % by Mass | | 32 | | 52 | 32 | 42 | 32 |
| UV Irradiation Amount | | - | mJ/cm² | 300 | 500 | 1000 | 1000 | 1000 | 1000 | 1000 |
| Thickness of Coating Film | | - | µm | | 20 | | 20 | 20 | 20 | 20 |
| Peeling Test | 180° peel strength (vs SUS) | - | N/25 mm | 13 | 10 | 5.3 | 13 | 16 | 20 | 5.6 |
| Ball Tack | | - | - | 6 | 4 | 2 | 4 | <2 | 4 | 2 |
| SAFT | | - | °C | 195 | 202 | 202 | 200 | >205 | 201 | 165 |

**Table 4-2**

| Component Name/Evaluation Item | | Biobased Content [% by mass] | Unit | Example B6 | Example B7 | Example B8 | Example B9 | Comparative Example CB1 | | | Comparative Example CB2 |
|---|---|---|---|---|---|---|---|---|---|---|---|
| Block Copolymer | Unhydrogenated Block Copolymer (X-1) | 80 | | 36 | 24 | 12 | 12 | - | | | - |
| | Hydrogenated Block Copolymer (X-3) | 80 | | - | - | - | - | 40 | | | - |
| | Unhydrogenated Block Copolymer (X-4) | 80 | | 4 | 16 | 28 | - | - | | | - |
| | Quintac 3421 | 0 | | - | - | - | 28 | - | | | 40 |
| Liquid Rubber Component | Unhydrogenated Liquid Rubber (Z-1) | 100 | Part(s) by Mass | - | - | - | - | | | | - |
| | Unhydrogenated Liquid Rubber (Z-2) | 0 | | - | - | - | - | - | | | - |
| Oil | PW-90 | 0 | | 20 | 20 | 20 | 20 | 20 | | | 20 |
| Tackifier | ARKON P90 | 0 | | 40 | 40 | 40 | 40 | 40 | | | 40 |
| Antioxidant | ADK STAB AO-60 | - | | 2 | 2 | 2 | 2 | 2 | | | 2 |
| Photoradical Polymerization Initiator | IRGACURE 651 | - | | 2 | 2 | 2 | 2 | 2 | | | 2 |
| Crosslinking Agent | Tris(mercaptoacetic acid) trimethylolpropane | - | | 1 | 1 | 1 | 1 | 1 | | | 1 |
| Biobased Content of Adhesive Composition | | - | % by Mass | 32 | 32 | 32 | 10 | 32 | | | 0 |
| UV Irradiation Amount | | - | mJ/cm² | 1000 | 1000 | 1000 | 1000 | 300 | 500 | 1000 | 1000 |
| Thickness of Coating Film | | - | µm | 20 | 20 | 20 | 20 | 20 | | | 20 |
| Peeling Test | 180° peel strength (vs SUS) | - | N/25 mm | 5.3 | 5.6 | 5.7 | 2.5 | 13 | 12 | 11 | 1.2 |
| Ball Tack | | - | - | 2 | 2 | 2 | 2 | 8 | 6 | 6 | 4 |
| SAFT | | - | °C | 200 | 165 | 137 | 190 | 97 | 105 | 197 | 187 |

As shown in Table 4, it can be seen that the adhesive compositions of Examples B1 to B9 have a high biobased content, were cross-linked so that the value of SAFT is greatly increased, and have high heat resistance as compared with the adhesive compositions of Examples A1 to A9 mentioned above. In addition, in Examples B2 to B4 and Example B1 in which the UV light irradiation amount was 300 and 500 mJ/cm², it can be seen that the 180° peel strength of the adhesive composition is high and good adhesive property is exhibited. In Examples B5, B6, B7, B8, B9, and Example B1 in which the UV light irradiation amount was 1,000 mJ/cm², it can be seen that the 180° peel strength of the adhesive composition is low, but it has a predetermined value of 2. 5N/25 mm or more. In addition, regarding Example B1, the value of SAFT when the UV light irradiation amount is 300 mJ/cm² is lower than the values of SAFT when the UV light irradiation amount is 500 and 1,000 mJ/cm², but is higher than the values of SAFT of the adhesive compositions of Examples A1 to A9 mentioned above, and it can be understood that crosslinking can be allowed to proceed to some extent even with a small UV light irradiation amount.

In contrast, the adhesive composition of Comparative Example CB1 has a significantly small value of SAFT after UV irradiation at 300 and 500 mJ/cm² compared to the adhesive composition of Example B1 having the same composition except that the "hydrogenated block copolymer having a degree of hydrogenation of 50 mol% or more" was used as the block copolymer. That is, it can be understood that in a case where the UV irradiation amount is small, it is difficult to cause crosslinking to proceed compared to Example B1. In addition, the value of SAFT is small even after UV irradiation at 1,000 mJ/cm², and it can be seen that the heat resistance is inferior.

Further, it can be seen that, similarly, the adhesive composition of Comparative Example CB2 also has a small value of SAFT and a small value of 180° peel strength after UV irradiation at 1,000 mJ/cm² and is inferior in heat resistance and adhesion property, compared to the adhesive composition of Example B1 having the same composition except that "unhydrogenated block copolymer that does not contain a structural unit derived from farnesene" were used as the block copolymer.

### [Examples C1 to C5 and Comparative Examples CC1 to CC5]

Each component in an amount shown in Table 5 was dissolved in cyclohexane to prepare a solution.

Next, cyclohexane was further added to the solution to adjust the solid content concentration (TS) to 25% by mass, thereby preparing an adhesive composition diluted so as to have a ratio of 20 parts by mass with respect to 60 parts by mass of cyclohexane.

10 g of this adhesive composition was poured into a box made of release paper having a W5 cm × D5 cm × H2 cm, air-dried at room temperature for 48 hours, and then further dried at 60°C for 2 hours to prepare a sheet having a thickness of 1 mm.

For the sheet of the adhesive composition of each of Examples C1 to C5 and Comparative Examples CC1 to CC5 thus prepared, various physical properties were measured according to the above-mentioned measuring procedures. The measurement results are shown in Table 5 together with the compositions.

**Table 5**

| Table 5-1 | | | | | | | |
|---|---|---|---|---|---|---|---|
| Component Name/Evaluation Item | | Unit | Example C1 | Example C2 | Example C3 | Example C4 | Example C5 |
| Block Copolymer | Unhydrogenated Block Copolymer (X-1) | Parts by Mass | 100 | 100 | 100 | 100 | 100 |
| | Hydrogenated Block Copolymer (X-3) | Parts by Mass | | - | - | - | - |
| Tackifier | T-REZ RB100 | Parts by Mass | 100 | - | - | - | - |
| | YS POLYSTER TH130 | Parts by Mass | - | 100 | - | - | - |
| | CLEARON P150 | Parts by Mass | - | - | 100 | - | - |
| | CLEARON M115 | Parts by Mass | - | - | - | 100 | - |
| | YS RESIN TO105 | Parts by Mass | - | - | - | - | 100 |
| Haze | | % | 33.3 | 6.8 | 3.6 | 3.0 | 8.6 |

**Table 5-2**

| Component Name/Evaluation Item | | Unit | Comparative Example CC1 | Comparative Example CC2 | Comparative Example CC3 | Comparative Example CC4 | Comparative Example CC5 |
|---|---|---|---|---|---|---|---|
| Block Copolymer | Unhydrogenated Block Copolymer (X-1) | Parts by Mass | - | - | - | - | - |
| | Hydrogenated Block Copolymer (X-3) | Parts by Mass | 100 | 100 | 100 | 100 | 100 |
| Tackifier | T-REZ RB100 | Parts by Mass | 100 | - | - | - | - |
| | YS POLYSTER TH130 | Parts by Mass | - | 100 | - | - | - |
| | CLEARON P150 | Parts by Mass | - | - | 100 | - | - |
| | CLEARON M115 | Parts by Mass | - | - | - | 100 | - |
| | YS RESIN TO105 | Parts by Mass | - | - | - | - | 100 |
| Haze | | % | 86.8 | 17.2 | 8.3 | 7.7 | 93.5 |

As shown in Table 5, the adhesive compositions of Examples C1 to C5 have a relatively small value of haze, and it can be understood that the compatibility between the block copolymer and the tackifier is high.

In contrast, it can be seen that the adhesive compositions of Comparative Examples CC1 to CC5 have a large value of haze and low compatibility between the block copolymer and the tackifier compared to the adhesive compositions of Examples C1 to C5 each having the same composition except that the "hydrogenated block copolymer having a degree of hydrogenation of 50 mol% or more" was used as the block copolymer.

### [Examples D1 to D5 and Comparative Examples CD1 to CD2]

Each component in an amount shown in Table 6 was dissolved in cyclohexane to prepare a solution. Next, cyclohexane was further added to the solution to adjust the solid content concentration (TS) to 25% by mass, thereby preparing a composition diluted so as to have a ratio of 20 parts by mass with respect to 60 parts by mass of cyclohexane. Further, this composition was air-dried at room temperature for 48 hours, and then further dried at 60°C for 2 hours to prepare an adhesive composition.

For the adhesive composition of each of Examples D1 to D5 and Comparative Examples CD1 to CD2 thus prepared, the biobased content and the melt viscosity at 180°C were measured by the above-mentioned procedures. The measurement results are shown in Table 6 together with their compositions.

**Table 6**

| Component Name/Evaluation Item | | Biobased Content [% by mass] | Unit | Example D1 | Example D2 | Example D3 | Example D4 | Example D5 | Comparative Example CD 1 | Comparative Example CD2 |
|---|---|---|---|---|---|---|---|---|---|---|
| Block Copolymer | Unhydrogenated Block Copolymer (X-1) | 80 | | 40 | 40 | 40 | - | 40 | - | - |
| | Hydrogenated Block Copolymer (X-2) | 80 | | - | - | - | 40 | - | - | - |
| | Hydrogenated Block Copolymer (X-3) | 80 | Part(s) by Mass | - | - | - | - | - | 40 | - |
| | Quintac 3421 | 0 | | - | - | - | - | - | - | 40 |
| Liquid Rubber Component | Unhydrogenated Liquid Rubber (Z-1) | 100 | | - | - | 20 | - | 10 | - | - |
| Oil | PW-90 | 0 | | 20 | - | - | 20 | 10 | 20 | 20 |
| | VIVA-B-FIX 10227 | 100 | | - | 20 | - | - | - | - | - |
| Tackifier | ARKON P90 | 0 | | 40 | 40 | 40 | 40 | 40 | 40 | 40 |
| Antioxidant | ADK STAB AO-60 | - | | 0.2 | 0.2 | 0.2 | 0.2 | 0.2 | 0.2 | 0.2 |
| Biobased Content of Adehesive Composition | | - | % by Mass | 32 | 52 | 52 | 32 | 42 | 32 | 0 |
| Melt Viscosity 180°C | | - | mPa·s | 3,000 | 6,100 | 7,200 | 13,000 | 5,800 | 77,000 | 17,000 |

As shown in Table 6, it can be seen that the adhesive compositions of Examples D1 to D5 have a high biobased content, a low melt viscosity at 180°C, and good fluidity when heated to 180°C, and are suitable for a hot-melt adhesive composition.

In contrast, it can be seen that the adhesive compositions of Comparative Examples CD1 to CD2 have a higher melt viscosity at 180°C than the adhesive compositions of Examples, and are inferior to the adhesive compositions of Examples in fluidity when heated to 180°C.

Note that the adhesive compositions of Examples D1 to D5 and Comparative Examples CD1 to CD2 were prepared using solvents, but each of the adhesive compositions may be prepared by melt-kneading the respective components in an amount shown in Table 6. In this case, measurement results similar to those mentioned above are also obtained.

### [Examples E1 to E6 and Comparative Examples CE1 to CE3]

Each component in an amount shown in Table 7 was dissolved in cyclohexane to prepare a solution.

Next, cyclohexane was further added to the solution to adjust the solid content concentration (TS) to 25% by mass, thereby preparing an adhesive composition for coating diluted so as to have a ratio of 20 parts by mass with respect to 60 parts by mass of cyclohexane.

This adhesive composition for coating was applied onto a polyethyleneterephthalate (PET) film at a rate of 50 mm/sec using an automatic coater (PI-1020 AUTO FILM APPLICATOR, manufactured by Tester Sangyo Co., Ltd.), and then dried by heating at 60°C for 30 minutes to form a coating film of the adhesive composition having a thickness of 20 µm.

Next, the coating film was irradiated with UV light (wavelength: 365 nm) at an irradiation amount of 300 mJ/cm² or 1,000 mJ/cm² in an oxygen atmosphere, using a F300S & LC-6B UV conveyor system (manufactured by Heraeus Group) to crosslink the adhesive composition.

For the crosslinked coating film of the adhesive composition of each of Examples E1 to E6 and Comparative Examples CE1 to CE3 thus prepared, various physical properties were measured according to the above-mentioned measuring procedures. The measurement results are shown in Table 7 together with the compositions.

**Table 7**

| Table 7-1 | | | | | | | | | | | | | | | |
|---|---|---|---|---|---|---|---|---|---|---|---|---|---|---|---|
| Component Name/Evaluation Item | | Biobased Content [% by mass] | Unit | Example E1 | | Example E2 | | Example E3 | | Example E4 | | Example E5 | | Example E6 | |
| Block Copolymer | Unhydrogenated Block Copolymer (X-1) | 80 | Part(s) by Mass | 40 | | 40 | | 40 | | - | | - | | - | |
| | Unhydrogenated Block Copolymer (X-5) | 70 | | - | | - | | - | | 40 | | 40 | | 40 | |
| | Quintac 3421 | 0 | | - | | - | | - | | - | | - | | - | |
| Oil | PW-90 | 0 | | 20 | | 20 | | 20 | | 20 | | 20 | | 20 | |
| Tackifier | ARKON P90 | 0 | | 40 | | 40 | | 40 | | 40 | | 40 | | 40 | |
| Antioxidant | ADK STAB AO-60 | - | | 2 | | 2 | | 2 | | 2 | | 2 | | 2 | |
| Photoradical Polymerization Initiator | IRGACURE 651 | - | | 2 | | 2 | | 2 | | 2 | | 2 | | 2 | |
| Crosslinking Agent | Tris(mercaptoacetic acid) trimethylolpropane | - | | 1 | | 0.5 | | 2 | | 1 | | 0.5 | | 2 | |
| Biobased Content of Adhesive Composition | | - | % by Mass | 32 | | 32 | | 32 | | 28 | | 28 | | 28 | |
| UV Irradiation Amount | | - | mJ/cm² | 300 | 1000 | 300 | 1000 | 300 | 1000 | 300 | 1000 | 300 | 1000 | 300 | 1000 |
| Thickness of Coating Film | | - | µm | 20 | | 20 | | 20 | | 20 | | 20 | | 20 | |
| Peeling Test | 180° peel strength (vs SUS) | - | N/25 mm | 13 | 5.3 | 15 | 8.4 | 10 | 6.8 | 12 | 8 | 16 | 13 | 8.6 | 10 |
| SAFT | | - | °C | 195 | 202 | 146 | 187 | 193 | >205 | 187 | 201 | 164 | 189 | 192 | >205 |

**Table 7-2**

| Component Name/Evaluation Item | | Biobased Content [% by mass] | Unit | Comparative Example CE1 | | Comparative Example CE2 | | Comparative Example CE3 | |
|---|---|---|---|---|---|---|---|---|---|
| Block Copolymer | Unhydrogenated Block Copolymer (X-1) | 80 | Part(s) by Mass | - | | - | | - | |
| | Unhydrogenated Block Copolymer (X-5) | 70 | | - | | - | | - | |
| | Quintac 3421 | 0 | | 40 | | 40 | | 40 | |
| Oil | PW-90 | 0 | | 20 | | 20 | | 20 | |
| Tackifier | ARKON P90 | 0 | | 40 | | 40 | | 40 | |
| Antioxidant | ADK STAB AO-60 | - | | 2 | | 2 | | 2 | |
| Photoradical Polymerization Initiator | IRGACURE 651 | - | | 2 | | 2 | | 2 | |
| Crosslinking Agent | Tris(mercaptoacetic acid) trimethylolpropane | - | | 1 | | 0.5 | | 2 | |
| Biobased Content of Adehesive Composition | | - | % by Mass | 0 | | 0 | | 0 | |
| UV Irradiation Amount | | - | mJ/cm² | 300 | 1000 | 300 | 1000 | 300 | 1000 |
| Thickness of Coating Film | | - | µm | 20 | | 20 | | 20 | |
| Peeling Test | 180° peel strength (vs SUS) | - | N/25 mm | 13 | 1.2 | 14 | 13 | 1.3 | 8.3 |
| SAFT | | - | °C | 180 | 187 | 131 | 171 | 158 | 190 |

As shown in Table 7, it can be seen that the adhesive compositions of Examples E1 to E6 have a slightly low value of SAFT when the irradiation amount is 300 mJ/cm², and this tendency is slightly increased when the content of the crosslinking agent is small. However, it shows a high value of SAFT at any UV irradiation amount and any content of the crosslinking agent, and it can be understood that the crosslinking can be moderately advanced with a small UV irradiation amount.

In contrast, it can be seen that, when the UV irradiation amount is 300 mJ/cm², each of the adhesive compositions of Comparative Examples CE1 to CE3 has a lower value of SAFT compared to the case where the UV irradiation amount is 1,000 mJ/cm², and when the content of the crosslinking agent is small, this tendency becomes more noticeable. Specifically, as compared with Examples E1 to E3 or Examples E4 to E6 in which the content of the crosslinking agent is the same as that of respective Comparative Examples CE1 to CE3, the adhesive compositions of Comparative Examples CE1 to CE3 have a small value of SAFT at the same irradiation amount, and the degree of decrease in the value of SAFT at the irradiation amount of 300 mJ/cm² with respect to the value of SAFT at the irradiation amount of 1,000 mJ/cm² is large. Further, as is clear from the comparison between Comparative Example CE2 and Example E2 or Example E5, when the content of the crosslinking agent is decreased, the degree of decrease in the value of SAFT at the irradiation amount of 300 mJ/cm² with respect to the value of SAFT at the irradiation amount of 1,000 mJ/cm² becomes larger. In other words, it can be seen that, in the adhesive compositions of Comparative Examples CE1 to CE3, in order to realize high SAFT, that is, high heat resistance, it is necessary to increase the UV irradiation amount as compared with the adhesive compositions of Examples E1 to E3 or Examples E4 to E6, in which the content of the crosslinking agent is the same as that of respective Comparative Examples CE1 to CE3.

### [Example F1 and Comparative Example CF1]

An adhesive composition was prepared by the same procedure as in Example B1 except that 1,6-bis (acryloyloxy) hexane was used in the same mass as the crosslinking agent instead of tris(mercaptoacetic acid) trimethylolpropane in Example B1 mentioned above (Example F1).

In addition, an adhesive composition was prepared in the same procedure as in Comparative Example CB1 except that 1,6-bis (acryloyloxy) hexane was used in the same mass as the crosslinking agent instead of tris(mercaptoacetic acid) trimethylolpropane in Comparative Example CB1 mentioned above (Comparative Example CF1).

This adhesive composition for coating was applied onto a polyethyleneterephthalate (PET) film at a rate of 50 mm/sec using an automatic coater (PI-1020 AUTO FILM APPLICATOR, manufactured by Tester Sangyo Co., Ltd.), and then dried by heating at 60°C for 30 minutes to form a coating film of the adhesive composition having a thickness of 20 µm.

Next, a plurality of test pieces was prepared by attaching an oxygen blocking film (PET film manufactured by Toyobo Co., Ltd., thickness: 50 µm) on the coating film. In addition, a plurality of test pieces to which the oxygen shielding film was not attached was prepared. Further, these test pieces were irradiated with UV light (wavelength: 365 nm) at an irradiation amount shown in Table 8 below, using a F300S & LC-6B UV conveyor system (manufactured by Heraeus Group) to crosslink the adhesive composition. Note that the irradiation with UV light was performed through the oxygen blocking film for the test piece to which the oxygen blocking film was attached, and the adhesive composition was directly irradiated with UV light for the test piece without the oxygen blocking film.

For the crosslinked coating film of the adhesive composition of each of Example F1 and Comparative Example CF1 thus prepared, various physical properties were measured according to the above-mentioned measuring procedures. The measurement results are shown in Table 8 together with the compositions.

**Table 8**

| Component Name/Evaluation Item | | Biobased Content [% by mass] | Unit | Example F1 | | | | | Comparative Example CF1 | | |
|---|---|---|---|---|---|---|---|---|---|---|---|
| Block Copolymer | Unhydrogenated Block Copolymer (X-1) | 80 | Part(s) by Mass | 40 | | | | | - | | |
| | Hydrogenated Block Copolymer (X-3) | 80 | | - | | | | | 40 | | |
| Oil | PW-90 | 0 | | 20 | | | | | 20 | | |
| Tackifier | ARKON P90 | 0 | | 40 | | | | | 40 | | |
| Antioxidant | ADK STAB AO-60 | - | | 2 | | | | | 2 | | |
| Photoradical Polymerization Initiator | IRGACURE 651 | - | | 2 | | | | | 2 | | |
| Crosslinking Agent | 1,6-bis(acryloyloxy) hexane | - | | 1 | | | | | 1 | | |
| Biobased Content of Adhesive Composition | | - | % by Mass | 32 | | | | | 32 | | |
| UV Irradiation Amount | | - | mJ/cm² | 500 | 1000 | 2000 | 1000 | 2000 | 500 | 1000 | 2000 |
| Presence or Absence of Oxygen Blocking Film | | - | - | Present | Present | Present | Absent | Absent | Present | Present | Present |
| Thickness of Coating Film | | - | µm | 20 | 20 | 20 | 20 | 20 | 20 | 20 | 20 |
| Peeling Test | 180° peel strength (vs SUS) | - | N/25 mm | 1.1 | 1.1 | 1.1 | 11 | 5.8 | 8.4 | 6.4 | 6.2 |
| SAFT | | - | °C | 142 | 182 | 189 | 108 | 133 | 103 | 103 | 107 |

As shown in Table 8, it can be seen that the coating film obtained by crosslinking the adhesive composition of Example F1 has a high value of SAFT, and an adhesive layer having high heat resistance can be obtained even when 1,6-bis(acryloyloxy) hexane which is an acrylic crosslinking agent is used. In particular, it can be seen that, when the crosslinking is performed by irradiating with UV light with the oxygen blocking film attached, the value of SAFT is increased even with a small irradiation amount as compared with the case of irradiating with UV light without the oxygen blocking film (that is, in the presence of oxygen). In addition, it can be seen that when the UV light is not irradiated, the 180° peel strength of the adhesive composition of Example F1 is equivalent to the 180° peel strength of the adhesive composition of Example A1 (19 N/25 mm) shown in Table 3, but when the oxygen blocking film is attached and the UV light is irradiated, the 180° peel strength becomes very small as shown in Table 8. Therefore, it can be understood that the adhesive composition can be easily peeled off from an adherend by reducing the adhesive property by light irradiation as necessary, and is very suitable for use in, for example, a dicing tape.

On the other hand, it can be seen that the coating film obtained by crosslinking the adhesive composition of Comparative Example CF1 using the hydrogenated block copolymer (X-3), which is a hydrogenated block copolymer having a degree of hydrogenation of 50% or more, has a small value of SAFT and is inferior in heat resistance compared to Example F1.

### Industrial Applicability

The adhesive composition of the present invention has a high biobased content, a moderate adhesive property, and high heat resistance. Therefore, it can be formed to partially or entirely cover various articles such as a paper product, a packaging material, a laminated wood panel, a kitchen countertop, a vehicle, a label, a disposable diaper, a hospital pad, a feminine sanitary pad, a surgical drape, a tape, a case, a carton, a tray, a medical apparatus, or a bandage, and used. In addition, it can be used to adhere to, as the adherend, metal, wood, paper, plastic, rubber, glass, stone, granite, marble, masonry construction, porcelain, ceramic, a tile, earthenware, concrete, clay, sand, chalk, woven-fabric, fabric, nonwoven fabric, leather, and a composite material thereof; a sheet, a strip, a tape, a label, a tag, a web, a disc, a plate, a film, and a pair of adherends (including a combination of adherends of the same materials) of any combination selected from any molded articles. Further, the adhesive composition of the present invention can be used as an adhesive layer of a dicing tape for temporarily fixing a workpiece such as a semiconductor wafer or a semiconductor device. The dicing tape fixes a workpiece to a support member such as a frame by an adhesive property, and when it is irradiated with UV, the adhesive property is reduced and it is easily peeled off from the workpiece. Further, the adhesive composition of the present invention can also be used as a hot-melt adhesive composition which is reduced in viscosity by heating and adheres to the above-mentioned various adherends.

## Claims

1. An adhesive composition comprising: a block copolymer (X) including a polymer block (A) containing a structural unit derived from an aromatic vinyl compound and a polymer block (B) containing a structural unit derived from a conjugated diene compound, and a tackifier (Y),
wherein the block copolymer (X) includes, as the polymer block (B), at least one polymer block (B-1) containing a structural unit derived from β-farnesene, and
the block copolymer (X) includes at least one selected from the group consisting of an unhydrogenated block copolymer (X0) which is a block copolymer that is not hydrogenated, and a hydrogenated block copolymer (X1) which is a hydrogenated block copolymer and has a degree of hydrogenation of less than 50 mol%.

2. The adhesive composition according to Claim 1, wherein a content of the tackifier (Y) is 50 to 170 parts by mass with respect to 100 parts by mass of the block copolymer (X).

3. The adhesive composition according to Claim 1 or 2, wherein the block copolymer (X) does not contain a diblock composed of the polymer block (A) and the polymer block (B), or the content of the diblock in the block copolymer (X) is more than 0% by mass and less than 60% by mass.

4. The adhesive composition according to any one of Claims 1 to 3, wherein at least one selected from the group consisting of the unhydrogenated block copolymer (X0) and the hydrogenated block copolymer (X1) having a degree of hydrogenation of less than 50 mol% is crosslinked.

5. The adhesive composition according to any one of Claims 1 to 4, wherein the block copolymer (X) has a glass transition temperature (Tg) of -52°C or lower.

6. The adhesive composition according to any one of Claims 1 to 5, further comprising at least one selected from the group consisting of a liquid rubber component (Za), a biomass-derived plasticizer (Zb), and a synthetic plasticizer (Zc).

7. The adhesive composition according to any one of Claims 1 to 6, further comprising a liquid rubber component (Za), wherein the liquid rubber component (Za) comprises at least one selected from the group consisting of an unhydrogenated liquid rubber (Za0), which is a liquid rubber that is not hydrogenated, and a hydrogenated liquid rubber (Za1), which is a hydrogenated liquid rubber and has a degree of hydrogenation of 90 mol% or less.

8. The adhesive composition according to any one of Claims 1 to 7, wherein a 180° peel strength measured in accordance with JIS Z 0237:2009 under conditions of a temperature of 23°C and a peel rate of 200 mm/minutes is 10.0 N/25 mm or more.

9. The adhesive composition according to any one of Claims 1 to 8, wherein a shear adhesion failure temperature (SAFT) calculated from a falling time of a weight in accordance with ASTM D3654M:2019 under conditions of an adhesive area of 25 mm × 25 mm, a weight of 500 g, a temperature range of 40 to 205°C, and a rate of temperature increase of 0.5°C/minutes is 200°C or higher.

10. The adhesive composition according to any one of Claims 1 to 9, wherein a biobased content of the adhesive composition measured in accordance with ASTM D6866-21 is 10 to 100% by mass.

11. The adhesive composition according to any one of Claims 1 to 10, wherein a vinyl bonding amount in the polymer block (B-1) is 3 to 20 mol%.

12. The adhesive composition according to any one of Claims 1 to 11, wherein the content of the polymer block (A) in the block copolymer (X) is 40% by mass or less.

13. A method for producing the adhesive composition according to any one of Claims 1 to 12, the method for producing the adhesive composition comprising:
(I) a step of dissolving the block copolymer (X) and the tackifier (Y) in a solvent and then distilling off the solvent; or
(II) a step of melt-kneading the block copolymer (X) and the tackifier (Y).
